(19) Europäisches Patentamt
European Patent Office
Office européen des brevets

(11) **EP 4 087 824 B1**

(12) **FASCICULE DE BREVET EUROPEEN**

(45) Date de publication et mention de la délivrance du brevet:
**26.11.2025 Bulletin 2025/48**

(21) Numéro de dépôt: **21700840.8**

(22) Date de dépôt: **07.01.2021**

(51) Classification Internationale des Brevets (IPC):
**C02F 1/52** (2023.01)    **C02F 1/28** (2023.01)

(52) Classification Coopérative des Brevets (CPC):
**C02F 1/5209;** C02F 1/283; C02F 1/5245;
C02F 2209/001; C02F 2209/003; C02F 2209/006;
C02F 2209/06; C02F 2209/11; C02F 2209/21

(86) Numéro de dépôt international:
**PCT/EP2021/050186**

(87) Numéro de publication internationale:
**WO 2021/140150 (15.07.2021 Gazette 2021/28)**

(54) **METHODE DE DEFINITION ET DE REGULATION D'UNE DOSE DE COAGULANT POUR UN TRAITEMENT PAR COAGULATION D'UNE EAU BRUTE**

**VERFAHREN ZUM DEFINIEREN UND REGULIEREN EINER DOSIERUNG VON KOAGULATIONSMITTEL FÜR EINE KOAGULATIONSBEHANDLUNG VON ROHWASSER**

**METHOD FOR DEFINING AND REGULATING A DOSE OF COAGULANT FOR A COAGULATION TREATMENT OF RAW WATER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2020 FR 2000225**

(43) Date de publication de la demande:
**16.11.2022 Bulletin 2022/46**

(73) Titulaire: **SUEZ International**
**92800 Puteaux (FR)**

(72) Inventeurs:
- **FAYOLAS, Arthur**
  **92040 PARIS LA DEFENSE CEDEX (FR)**
- **CAUDRON, Christophe**
  **92040 PARIS LA DEFENSE CEDEX (FR)**
- **STEINMANN, Delphine**
  **92040 PARIS LA DEFENSE CEDEX (FR)**

(74) Mandataire: **Lavoix**
**2, place d'Estienne d'Orves**
**75441 Paris Cedex 09 (FR)**

(56) Documents cités:
JP-A- 2005 125 207    JP-A- 2012 196 628
JP-A- 2014 065 030    US-A1- 2013 037 463

## Description

### Domaine technique de l'invention

L'invention se situe dans le domaine du traitement de l'eau et plus précisément de la coagulation pour éliminer la matière organique d'une eau brute. En particulier, l'invention se rapporte à une méthode de définition et de régulation d'une dose de coagulant à ajouter dans une eau brute pour éliminer la matière organique.

L'invention concerne en outre un produit programme d'ordinateur comprenant des instructions de code de programme pour l'exécution des étapes de la méthode lorsque ledit programme est exécuté sur un ordinateur. L'invention concerne en outre un système de définition et de régulation d'une dose de coagulant.

L'invention concerne également un procédé de traitement de l'eau comprenant au moins une étape de coagulation.

### Etat de la technique

La coagulation (ou coagulation/décantation) est un procédé de traitement de l'eau connu permettant d'éliminer les matières en suspension (turbidité) et la matière organique contenue dans une eau. Ce traitement est applicable aux eaux usées, eaux de rivières et plus généralement tout type d'eau.

Généralement, une première étape est effectuée par ajout de coagulant, le plus souvent des sels métalliques, dans une eau d'entrée dite « eau brute » (EB). En général, l'eau brute est introduite dans un réacteur ou un bassin et le coagulant est ajouté dans ledit réacteur ou bassin. Une seconde étape consiste ensuite en l'agglomération des particules coagulées à l'aide usuellement d'un polymère. Enfin, une troisième étape de décantation des particules permet la séparation des particules. A l'issue de ces étapes, on obtient une eau de sortie dite « eau décantée » (ED).

Cependant, les eaux brutes peuvent être sujettes à des variations plus ou moins rapides de qualité en raison de conditions climatiques ou de l'activité humaine. Ces variations modifient les propriétés physico-chimiques des eaux mais également la composition de la matière organique. En conséquence, il est nécessaire de modifier la dose de coagulant à utiliser pour adapter le traitement de l'eau brute. En effet, la dose de coagulant à utiliser dépend de la turbidité et de la matière organique, une matrice complexe de substances organiques communément présente dans les eaux de surface et les eaux souterraines, et plus largement dans tous les types d'eaux. Cette matrice peut être due à l'origine de l'eau mais également à la pollution, par exemple par drainage de bassin versant. De plus, les variations saisonnières, le pH ainsi que d'autres paramètres extérieurs peuvent influencer la quantité ou la qualité de la matière organique.

La performance d'élimination de la matière organique est liée à sa qualité qui est donc très variable et qui est difficile à anticiper.

Aujourd'hui, la réalisation d'essais en laboratoire, typiquement de jar tests, est la manière la plus fiable pour déterminer les conditions optimales de traitement, et particulièrement la dose de coagulant et le pH de coagulation, pour l'élimination de la turbidité et de la matière organique. Le pH de coagulation est un pH ajusté pour améliorer l'efficacité du coagulant. L'ajustement du pH se fait en général dans le réacteur ou le bassin dans lequel le coagulant est introduit, généralement en ajoutant de l'acide dans le réacteur ou le bassin. Cependant ces essais sont chronophages et impossibles à mettre en œuvre en continu pour pouvoir répondre au besoin des exploitants, notamment lors de variations rapides de la qualité de l'eau brute.

Par conséquent, en général, les opérateurs utilisent des doses de coagulant excessives afin de garantir le respect de l'objectif de qualité, en prenant une marge de sécurité. Ce surdosage entraîne désavantageusement des surcoûts d'exploitation, aussi bien en termes de coûts de réactifs que de coût de traitement des boues car les quantités de boues générées sont plus importantes.

Pour pallier ce problème, il existe des systèmes permettant de déterminer une dose de coagulant à injecter pour atteindre un objectif souhaité de qualité de l'eau en sortie de coagulation. Ces systèmes sont de deux types :

- système à commande rétroactive : la dose de coagulant est régulée par rapport à la qualité de l'eau en sortie du procédé de coagulation ;

- système prédictif : la dose de coagulant est définie par rapport à la qualité de l'eau en entrée du procédé de coagulation (paramètres utilisés : turbidité, absorbance UV à 254 nm, carbone organique total COT...).

Parmi les systèmes à commande rétroactive, il existe un système utilisant le potentiel zêta pour contrôler et optimiser la coagulation (Critchley et al., Automatic coagulation control at water-treatment plants in the north-west region of England, 1990). Le potentiel zêta permet de mesurer la charge de l'eau, par exemple à l'aide d'un analyseur SCD (Streaming Current Detector). Selon les mécanismes physico-chimiques de la coagulation, le point optimal de la coagulation correspond à un potentiel zêta de 0. Cependant, les variations rapides de débit et les conditions de mélange non optimisées peuvent entraîner des réponses instables et donc une faible fiabilité des résultats. De plus, la mesure est sensible au changement de pH et de minéralisation et il est nécessaire d'étalonner fréquemment l'analyseur pour compenser ces modifications. Il en résulte un système peu fiable. Enfin, le système ne prend pas en compte l'objectif de qualité de l'eau souhaitée en sortie de coagulation, lequel objectif peut varier en fonction des étapes en aval de la coagulation, et notamment en fonction des performances attendues de ces étapes.

Parmi les systèmes prédictifs, il existe des modèles se basant sur des historiques de données. Ces modèles peuvent utiliser une intelligence artificielle tel un réseau neuronal artificiel, le réseau étant alimenté par des données d'historiques d'une usine, et éventuellement des données issues de capteurs (pour caractériser typiquement la qualité de l'eau à différents stades d'un procédé de traitement). L'intelligence artificielle du système apprend des événements du passé, ce qui lui permet de mettre à jour les règles de calcul pour obtenir la meilleure réponse du modèle.

On peut citer des modèles avec régression classique, se référant à des équations classiques du type linéaire, quadratique, logarithmique, exponentiel. Les paramètres permettant de calculer la dose de coagulant sont définis à partir d'historiques de données. Cependant, la précision de ces modèles n'est pas très bonne, étant basés sur des équations simples, alors que les phénomènes de coagulation sont des phénomènes complexes.

On peut citer d'autres modèles plus complexes, tels que décrits dans la publication «MLP, ANFIS, and GRNN based real-time coagulant dosage determination and accuracy comparison using full-scale data of a water treatment plant», Chan Moon Kim and Manukid Parnichkun, Journal of Water Supply, Research and Technology - AQUA - 66.1-2017. Le modèle est basé sur un jeu de milliers de données, issues d'historiques d'usine pour définir le meilleur modèle statistique permettant de calculer la dose de coagulant optimale pour l'élimination de la turbidité. Les 3 modes d'intelligence artificielle étudiés (MLP, ANFIS et GRNN) montrent une réponse en adéquation avec les résultats observés sur l'usine et la combinaison des 3 outils permet d'améliorer la précision du modèle sur une gamme large de turbidité eau brute (de 0 à 450 NTU).

L'inconvénient majeur de ces modèles se basant sur des historiques de données est qu'ils sont spécifiques à chaque site. En outre, il n'est pas possible de réaliser une réelle optimisation de la dose de coagulant étant donné que le modèle se base sur d'anciennes données et non sur la qualité de l'eau avant le traitement. Par ailleurs, ces modèles basés sur des historiques ne peuvent que reproduire le passé et non pas l'optimiser. Ils indiquent la dose de coagulant à injecter tel que cela a été fait dans le passé sans garantir que c'est la dose optimale pour délivrer une eau conforme au meilleur coût.

D'autres modèles plus complexes peuvent utiliser des résultats de tests en laboratoire, tels des jar tests, sur une grande variété d'eau. Ces résultats sont utilisés pour définir des constantes d'équations déterminant une quantité de coagulant à utiliser en fonction de la qualité de l'eau en entrée.

A titre d'exemple, un modèle d'optimisation nommé mEnCo (Modelization of ENhanced COagulation) a été développé en Australie par l'Australian Cooperative Research Centre for Water Quality and Treatment. Des équations mathématiques donnent des relations entre le Carbone Organique Dissous (COD) et la dose de coagulant. Les constantes intégrées dans ces équations doivent être déterminées à l'aide de résultats de jar tests issus d'une grande variété d'eaux australiennes. Si le modèle mEnCo donne de bons résultats sur plusieurs usines australiennes, il reste que ce modèle est encore très spécifique à une usine, ou du moins à un type d'eau brute.

Un autre type de modèle prédictif est décrit dans la publication « Predicting DOC removal during enhanced coagulation », Edwards, Journal - American Water Works Association, 89(5), 78-89, 1997 qui présente un modèle de coagulation basé sur les lois de l'adsorption appliqué à l'élimination de la matière organique. L'algorithme du modèle décrit les phénomènes physico-chimiques durant la coagulation. Le modèle d'Edwards a été amélioré par Kastl et al. (2004), qui a divisé la matière organique en 3 fractions :

- la fraction non adsorbable sur les hydroxydes métalliques (fraction inerte à la coagulation),

- la fraction polaire qui peut être éliminée par coagulation en fonction de la dose de coagulant et du pH de coagulation,

- la fraction non-polaire qui peut être éliminée par coagulation seulement en fonction de la dose de coagulant.

Le modèle est basé sur 5 équations avec 5 paramètres inconnus pour déterminer les constantes permettant de faire tourner le modèle : la capacité de sorption maximale, la constante d'adsorption, la fraction d'acides humiques, la fraction non polaire, le pKa des acides humiques. Ces 5 paramètres sont déterminés en réalisant des essais jar tests dans des conditions spécifiques (dose de coagulation et pH de coagulation). Ces 5 paramètres dépendant de la matrice organique (charge, hydrophobicité, taille, type...), ils doivent donc être déterminés pour chaque type de matrice organique.

Les données d'entrée et de sortie sont décrites ci-dessous, avec deux options possibles :

- les entrées : teneur en matière organique (COD) de l'eau brute, pH de coagulation et objectif de COD à atteindre en eau décantée donnent en sortie la dose de coagulant,

- les entrées : teneur en matière organique (COD) de l'eau brute, pH de coagulation et dose de coagulant donnent en sortie la teneur en COD de l'eau décantée.

Cependant, les modèles Edwards et Kastl présentent les inconvénients suivants : le modèle est spécifique à chaque site, et les constantes qui permettent d'adapter le modèle doivent être déterminées en passant par des essais laboratoires chronophages.

On comprend de ces différents exemples de modèles prédictifs que :

- soit les modèles sont basés sur l'étude statistique d'historiques de données pour définir les constantes des équations permettant le calcul de la dose de coagulant : dans ce cas il n'y a pas d'optimisation possible ;

- soit les modèles sont basés sur des essais laboratoires pour définir les constantes des équations permettant le calcul de la dose : dans ce cas, la mise en œuvre des modèles est chronophage.

En outre, ces modèles sont en général spécifiques à une usine, ou du moins à type d'eau brute. Enfin, ces systèmes manquent en général de précision.

Ainsi il a été développé un système plus précis, tel que décrit dans la demande de brevet WO2009002192, qui décrit des méthodes de calcul de dose de produit chimique pour traiter une eau brute, en prenant en compte la turbidité de l'eau comme mesure du contenu particulaire, ainsi que l'absorbance de l'eau à l'ultraviolet (absorbance UV) et le carbone organique dissous (COD) comme mesure de la matière organique dissoute dans l'eau brute. Ces mesures permettent de prédire une dose de produit chimique à ajouter à l'eau, en utilisant notamment la somme du contenu particulaire et du contenu en matière organique dissoute. Les documents JP 2014/065030, JP 2005/125207, JP 2012/196628 et US 2013/037463 décrivent des procédés de régulation d'une dose de coagulant.

Pourtant, la précision de ces méthodes a besoin d'être améliorée pour utiliser une quantité de coagulant la plus faible possible tout en obtenant un effet maximal de coagulation. En effet, ces méthodes sont de type empirique et/ou expérimental et non pas chimique. Elles ne prennent en effet pas en compte tous les paramètres essentiels pour estimer la qualité de l'eau, qui affectent particulièrement les performances de coagulation.

L'invention vise à pallier les inconvénients des méthodes et systèmes de l'état de la technique pour le dosage de coagulant.

L'invention vise une méthode qui permet d'optimiser et de réguler la quantité de coagulant à utiliser pour un procédé de traitement de l'eau, en d'autres termes qui permet de déterminer une dose de coagulant optimale, en évitant notamment de surdoser en coagulant, et de piloter la dose optimale de manière à maintenir un dosage optimal, voire améliorer cette optimisation, tout au long du procédé de traitement par coagulation. En particulier, il est recherché une méthode qui permette de piloter la quantité de coagulant à utiliser lorsque la qualité de l'eau à traiter varie au cours du procédé.

Ainsi, il est recherché une méthode permettant d'obtenir et de maintenir une quantité de coagulant plus précise, fiable et optimale de coagulant à utiliser dans une eau brute, qui soit rapide, simple et efficace et non spécifique à un site et/ou à un type d'eau brute donnée, et qui puisse être automatisée.

## Exposé de l'invention

L'invention permettant de remédier à ces inconvénients consiste en une méthode de définition et de régulation d'une dose de coagulant, et éventuellement d'au moins un second réactif, à injecter dans un moyen de traitement par coagulation d'une eau brute en une eau décantée telle que décrite dans la revendication 1. Des modes de réalisation particuliers de l'invention sont décrits dans les revendications 2 à 12.

L'invention consiste en une combinaison d'une dose optimale de coagulation définie et d'une boucle de régulation fermée de manière à réguler la dose de coagulant à injecter, et le point de départ de la boucle de régulation est ladite dose de coagulant optimale. Cela permet d'améliorer l'optimisation de la dose de coagulant tout au long du procédé de traitement par coagulation.

La méthode selon l'invention peut intégrer aussi une étape de définition d'une dose optimale d'au moins un second réactif, comme cela sera expliqué plus après.

L'étape de régulation peut agir sur le dosage d'au moins un second réactif, comme cela sera expliqué plus après, sans qu'il ait été nécessairement défini auparavant une dose optimale dudit second réactif.

Le coagulant (et le second réactif le cas échéant) est destiné à être injecté dans un moyen de traitement par coagulation, tel un réacteur ou un bassin de coagulation/décantation.

L'injection de coagulant implique l'injection d'une dose de coagulant égale à la dose optimale de coagulant définie (si étape de régulation non enclenchée ou arrêtée), ou augmentée ou diminuée par rapport à la dose optimale de coagulant définie (si étape de régulation enclenchée).

Dans l'ensemble de la description, on définit l'eau brute (EB) comme étant l'eau en entrée (amont) du procédé de coagulation, et l'eau décantée (ED) comme étant l'eau en sortie (aval) du procédé de coagulation.

Dans l'ensemble de la description, par matière organique, il faut entendre la matière organique dissoute, à la différence de la turbidité qui vise le contenu particulaire, ou matière en suspension, dans l'eau.

Selon un mode de réalisation, le deuxième paramètre organique est choisi parmi l'absorbance UV, de préférence à 254 nm, le carbone organique dissous, le ratio entre l'absorbance UV, de préférence à 254 nm et le COD (Carbone Organique Dissous), ou une combinaison desdits paramètres. L'absorbance UV procure une mesure plus simple, et en général plus économique que la mesure du COD.

Selon un mode de réalisation, le deuxième paramètre organique comprend plusieurs paramètres organiques, typiquement l'absorbance UV et le COD.

L'au moins un paramètre minéral apte à renseigner sur la charge minérale d'une eau brute. Le au moins un paramètre minéral peut être choisi parmi le titre alcalinométrique complet, la concentration en ions chlorure, la concentration en ions sodium, la concentration en ions sulfate, la concentration en ions calcium, la concentration en ions magnésium, la concentration en ions silicates, la conductivité, ou une combinaison desdits paramètres.

De préférence, le paramètre minéral comprend plusieurs paramètres minéraux, typiquement le titre alcalinométrique complet, la concentration en ions chlorure et/ou la concentration en ions sodium.

Selon un mode de réalisation, les valeurs pour l'eau brute et/ou l'eau décantée du deuxième paramètre organique sont déterminées par des mesures de l'eau brute et/ou l'eau décantée, par exemple des mesures en ligne réalisées par un capteur de carbone organique dissous (avec de préférence une étape de préfiltration), un capteur UV (avec de préférence une étape de préfiltration) ou une combinaison de telles mesures.

Selon un mode de réalisation, les valeurs pour l'eau brute du au moins un paramètre minéral sont déterminées par des mesures de l'eau brute, par exemple des mesures en ligne réalisées par un capteur de conductivité, ou des mesures par échantillonnage réalisées par un analyseur de titre alcalinométrique complet, un analyseur de concentrations en ions ou une combinaison de telles mesures.

De tels capteurs peuvent également avantageusement suivre la qualité de l'eau tout au long du procédé de traitement de l'eau (pour l'eau brute, l'eau décantée, voire pour l'eau traitée comme cela est expliqué plus après dans la présente description).

La dose de coagulant (et de second réactif le cas échéant) peut être ajoutée automatiquement dans le moyen traitement par coagulation/décantation, ce qui permet de faciliter l'étape de régulation de ladite dose, et réaliser le tout de manière automatique.

L'étape de régulation permet d'ajuster automatiquement la dose de coagulant, en cas de variation de la qualité de l'eau décantée en matière organique. Etant donné le caractère non linéaire des réponses lors de l'injection du coagulant (et du second réactif) dans le réactif ou le bassin de coagulation/décantation, l'étape de régulation ne peut pas être utilisée seule et doit bien être couplée avec une étape préalable de définition d'une dose optimale de coagulant, qui est la dose de coagulant prise en compte au début de l'étape de régulation. L'invention permet de disposer d'un pilotage le plus automatique possible de l'injection de coagulant (et de second réactif) dans le moyen de coagulation/décantation, avec un minimum d'action de l'exploitant. L'exploitant peut être amené à intervenir seulement dans les cas d'alerte, cas que l'étape de régulation peut intégrer.

L'étape de régulation peut avantageusement implémenter des logiques d'automatisme déjà utilisées dans le domaine du traitement de l'eau ou de l'industrie de manière générale. Elle met en œuvre une boucle de régulation fermée.

Selon un mode de réalisation, l'étape de régulation met en œuvre un régulateur PID (Proportionnel, Intégral, Dérivé).

Selon un mode de réalisation, la boucle de régulation fermée a pour valeur de consigne la valeur cible en matière organique de l'eau décantée, et comme variable d'action la dose de réactif (coagulant et/ou de second réactif comme le Charbon Actif en Poudre) injecté dans le moyen de coagulation. Lorsque la boucle est un régulateur PID, celui-ci calcule l'écart entre la valeur de matière organique réelle et la valeur cible, ainsi que l'intégrale et la dérivée de cet écart en fonction du temps. Trois facteurs multiplicateurs sont associés : un premier à l'écart, un deuxième à son intégrale et un troisième à sa dérivée pour obtenir le signal de la variable d'action, c'est-à-dire la diminution ou l'augmentation de la dose de réactif injecté.

Les facteurs multiplicateurs sont définis selon les caractéristiques suivantes :

- l'efficacité du réactif et/ou le volume du moyen de coagulation/décantation (le volume joue sur le facteur de dilution du réactif) qui influencent l'amplitude de la réponse : ainsi le facteur multiplicateur associé à l'écart est fonction de l'efficacité du réactif et/ou du volume du moyen de coagulation/décantation ;

- le débit de l'eau qui joue sur le temps de séjour hydraulique dans le moyen de coagulation/décantation (un débit plus faible entraine un temps de séjour plus long et inversement) ; le temps de réponse entre le moment où le réactif est injecté en amont du moyen de coagulation/décantation et le moment où son effet sur l'eau décantée est détecté peut donc changer en fonction du débit : ainsi le facteur multiplicateur associé à la dérivée et celui associé à l'intégrale sont fonction du débit de l'eau.

Selon un mode de réalisation avantageux, l'étape de régulation comprend en outre une étape de détermination d'une variation dans le temps du deuxième paramètre organique de l'eau brute, l'étape de régulation de la dose de coagulant étant bloquée si ladite variation est supérieure à une limite de variation définie, la dose de coagulant à injecter étant alors la dose optimale de coagulant. Par « bloquer », on entend que l'étape de régulation n'est pas enclenchée ou est arrêtée. Ce mode est avantageux dans la mesure où l'étape de régulation, ou plus exactement l'effet de l'étape de régulation de la dose de coagulant sur la matière organique de l'eau décantée, n'est pas assez rapide pour permettre une régulation optimale.

Selon un mode de réalisation avantageux, la méthode comprend en outre une étape de mesure du pH de l'eau décantée, l'étape de régulation comprenant une étape de blocage de l'augmentation de la dose de coagulant si le pH de l'eau décantée est inférieur à un seuil de pH. Par « blocage », on entend que la dose n'est pas augmentée (par exemple le pH est inférieur au seuil dès le début de la régulation) ou que la dose n'est plus augmentée.

La dose de coagulant augmentée est de préférence inférieure à une valeur de coagulant maximale. Cette valeur maximale peut être liée, voire être égale à la dose maximale économiquement admissible de coagulant (DMEA).

La dose de coagulant diminuée est de préférence supérieure à une valeur de coagulant minimale.

Lorsque la méthode comprend une étape de définition d'une valeur cible de la turbidité pour l'eau décantée et une étape de détermination d'une deuxième dose de coagulant à injecter à l'eau brute pour atteindre la valeur cible de la turbidité pour l'eau décantée, la dose de coagulant diminuée est de préférence supérieure ou égale à ladite deuxième dose de coagulant.

Selon un mode de réalisation, l'étape de régulation comprend en outre une étape d'ajout d'un second réactif dans le moyen de coagulation, par exemple un charbon actif en poudre (CAP), si l'écart entre la valeur réelle et la valeur cible du paramètre organique est supérieur au seuil supérieur.

Selon un mode de réalisation, la méthode peut comprendre une étape de définition d'une dose optimale d'un second réactif à injecter, par exemple un charbon actif en poudre (CAP), ladite étape de définition d'une dose optimale d'un second réactif étant antérieure à l'étape de régulation.

De préférence, le second réactif est choisi de manière à ne pas faire diminuer le pH de l'eau décantée, par exemple du charbon actif en poudre (CAP).

Selon un mode de réalisation, l'étape de régulation comprenant en outre :

- une étape d'augmentation du second réactif si l'écart entre la valeur réelle et la valeur cible du deuxième paramètre organique dans l'eau décantée est supérieur au seuil supérieur, et/ou - une étape de diminution du second réactif si l'écart entre la valeur réelle et la valeur cible du deuxième paramètre organique dans l'eau décantée est inférieur au seuil inférieur. Ce mode peut s'appliquer dans le deux cas décrits ci-avant c'est-à-dire : si une dose optimale du second réactif est définie antérieurement à l'étape de régulation (dans le cas, on peut augmenter la dose ou la diminuer), ou si l'étape de régulation ajoute le second réactif (dans ce cas on peut continuer à injecter le second réactif ou au contraire diminuer la dose lorsqu'on retombe en dessous du seuil inférieur).

Selon un mode de réalisation particulier, l'étape de régulation comprend, si l'écart entre la valeur réelle et la valeur cible du deuxième paramètre organique dans l'eau décantée est supérieur au seuil supérieur :

- une étape d'augmentation de la dose de coagulant jusqu'à la dose maximale économiquement admissible de coagulant (DMEA) ;

puis, si la dose de coagulant atteint la DMEA et si l'écart entre la valeur réelle et la valeur cible du deuxième paramètre organique dans l'eau décantée reste supérieur au seuil supérieur, l'étape de régulation comprend en outre une étape d'ajout du second réactif, par exemple du charbon actif en poudre (notamment tant que l'écart entre la valeur réelle et la valeur cible du deuxième paramètre organique dans l'eau décantée reste supérieur au seuil supérieur).

Selon un mode de réalisation particulier, l'étape de régulation comprend, si l'écart entre la valeur réelle et la valeur cible du deuxième paramètre organique dans l'eau décantée est inférieur au seuil inférieur :

- une étape de diminution de la dose du second réactif, par exemple du charbon actif en poudre, tant que l'écart entre la valeur réelle et la valeur cible du deuxième paramètre organique dans l'eau décantée reste inférieur au seuil inférieur ;

puis, lorsque la dose du second réactif est nulle et que l'écart entre la valeur réelle et la valeur cible du deuxième paramètre organique dans l'eau décantée reste inférieur au seuil inférieur, l'étape de régulation comprend en outre une étape de diminution de la dose de coagulant (notamment tant que l'écart entre la valeur réelle et la valeur cible du deuxième paramètre organique dans l'eau décantée reste inférieur au seuil inférieur).

En particulier, la dose de coagulant peut être diminuée tant qu'elle reste supérieure ou égale à la deuxième dose de coagulant définie pour atteindre la valeur cible de la turbidité pour l'eau décantée.

Ainsi, l'invention permet de combiner deux moyens de définition de doses de réactifs, un moyen de définition de doses de type méthode prédictive et un moyen de régulation de doses, notamment selon que la qualité de l'eau brute varie plus ou moins rapidement, en d'autres termes selon que la qualité de l'eau brute est suffisamment stable. La méthode prédictive prend le pas tant que la qualité de l'eau brute n'est pas suffisamment stable.

Lorsque l'étape de régulation est activée, elle ne contrôle qu'un réactif à la fois (coagulant ou second réactif). La méthode prédictive peut en outre rester active pour notamment déterminer sur quel réactif (coagulant ou second réactif) l'étape de régulation va agir en priorité. La méthode prédictive peut en outre rester active pour déterminer la dose de coagulant minimale à injecter, notamment pour atteindre la cible de turbidité de l'eau décantée.

L'étape de définition d'une dose optimale est déterminée par une méthode prédictive.

Modes de réalisation de l'étape de définition de la dose optimale de coagulant (méthode prédictive)

Selon l'invention, l'étape de définition de la dose optimale de coagulant est une méthode prédictive.

Selon l'invention, l'étape de définition utilise un premier paramètre organique apte à renseigner sur l'aptitude d'une eau brute à coaguler, un second paramètre organique apte à renseigner sur la quantité de matière organique d'une eau brute, et au moins un paramètre minéral apte à renseigner sur la charge minérale d'une eau brute.

Le premier paramètre organique et le paramètre minéral permettent de définir une classe d'eau pour une eau brute.

Selon l'invention, la méthode prédictive comprend les étapes suivantes :

- une étape de détermination d'une valeur pour l'eau brute du premier paramètre organique ;

- une étape de détermination d'une valeur pour l'eau brute du paramètre minéral ;

- une étape de détermination d'une classe d'eau pour l'eau brute en fonction des valeurs déterminées pour l'eau brute du premier paramètre organique et du paramètre minéral, une classe d'eau étant caractérisée par une première plage de valeurs du premier paramètre organique et une seconde plage de valeurs du paramètre minéral ;

- une étape de détermination d'une valeur pour l'eau brute d'un second paramètre organique ;

- une étape de définition d'une valeur cible pour l'eau décantée du second paramètre organique ;

- une étape de sélection d'une fonction apte à établir une relation entre le second paramètre organique et une dose de coagulant ajoutée à l'eau brute, ladite fonction étant sélectionnée pour la classe d'eau déterminée pour l'eau brute et pour la valeur déterminée pour l'eau brute du second paramètre organique ;

- une étape d'utilisation de la fonction sélectionnée, de manière à déterminer une première dose de coagulant correspondant à la valeur cible définie pour l'eau décantée du second paramètre organique, la première dose de coagulant étant la dose optimale de coagulant.

Ainsi, dans ce mode de réalisation, la méthode prédictive détermine une dose optimale de coagulant :

- en intégrant les performances des étapes aval du procédé de coagulation (par exemple, étape d'ozonation ou filtration sur charbon actif en grain), et en définissant alors la dose « strictement » nécessaire pour l'objectif à atteindre en eau décantée,

- en considérant au moins un paramètre organique et au moins un paramètre minéral de l'eau brute,

- en utilisant des classes d'eaux, chaque classe d'eau étant caractérisée par au moins une première plage de valeurs d'au moins un premier paramètre organique (qui permette de renseigner sur l'aptitude d'une eau à coaguler) et une seconde plage de valeurs d'au moins un second paramètre minéral (qui permette de renseigner sur la charge minérale d'une eau),

- en déterminant la classe d'eau de l'eau brute selon le premier paramètre organique et le paramètre minéral,

- en utilisant, pour la classe d'eau déterminée, des fonctions permettant de relier une première dose de coagulant et la matière organique contenue dans l'eau brute, et pour atteindre l'objectif en eau décantée.

Dans chaque classe d'eau, de telles fonctions sont de préférence disponibles dans au moins une base de données apte à fournir, pour chaque classe d'eau et pour des valeurs données pour l'eau brute du second paramètre organique, une fonction apte à établir une relation entre le second paramètre organique et une dose de coagulant ajoutée à l'eau brute.

Une base de données est définie dans la présente description comme un espace (conteneur, mémoire ...) de stockage. La base de données peut être alimentée par des essais sur des eaux différentes. Elle peut être alimentée lors de l'utilisation de la méthode prédictive.

Les classes d'eau permettent de classer les eaux brutes dans des catégories plus ou moins fines, en fonction des critères utilisés pour déterminer ces classes d'eaux. Les classes d'eau permettent à minima de prendre en compte au moins un paramètre de minéralité de l'eau brute.

En outre, la méthode prédictive peut intégrer l'effet du pH de coagulation, comme cela est expliqué plus après.

En outre, la méthode prédictive peut intégrer la recherche de la combinaison de réactifs (notamment entre une dose de coagulant et une dose de Charbon Actif en Poudre et/ou une dose d'acide) la moins coûteuse pour atteindre l'objectif fixé, comme cela est expliqué plus après.

La détermination des classes d'eau peut comprendre l'utilisation de classes d'eaux déjà déterminées, par exemple stockées dans une base de données.

Une telle méthode prédictive permet d'obtenir une quantité plus précise et plus juste de coagulant à utiliser dans une eau brute, qui ne soit pas spécifique à un site, mais qui soit établie en fonction des caractéristiques de l'eau à traiter.

Selon un mode de réalisation avantageux, la méthode prédictive comprend en outre une étape de détermination du pH de coagulation, la fonction étant sélectionnée également pour le pH de coagulation. Cela permet d'obtenir une première dose optimale de coagulant en simulant différents pH de coagulation, pour connaître notamment le pH de coagulation optimal.

Dans le cas où les fonctions sont disponibles dans au moins une base de données, celle-ci est apte à fournir pour chaque classe d'eau, pour des valeurs données pour l'eau brute du second paramètre organique et pour des valeurs de pH de coagulation, une fonction apte à établir une relation entre le second paramètre organique et une dose de coagulant ajoutée à l'eau brute.

Selon un mode de réalisation, la méthode prédictive comprend en outre une étape préliminaire de détermination d'une pluralité de classes d'eau, chaque classe d'eau étant caractérisée par au moins une première plage de valeurs d'au moins un premier paramètre organique apte à renseigner sur l'aptitude d'une eau à coaguler et une seconde plage de valeurs d'au moins un paramètre minéral apte à renseigner sur la charge minérale d'une eau. Lorsque les classes d'eau sont stockées dans une base de données, ladite base de données peut ainsi être alimentée lors de l'utilisation de la méthode.

Une classe $CL_i$ d'eau est par exemple un ensemble d'eaux brutes pour lesquelles la relation entre la matière organique non coagulable d'une eau brute et la valeur ($P_{ORG2\_EB}$) pour l'eau brute du second paramètre organique ($P_{ORG2}$) est définie par un ensemble de premières relations linéaires $R_{i1}$.

Une classe $CL_i$ d'eau est également par exemple un ensemble d'eaux brutes pour lesquelles la relation entre la matière organique non coagulable d'une eau et le pH de coagulation pHc est définie par une seconde relation $R_{i2}$ linéaire, exponentielle ou polynomiale, par exemple polynomiale de second degré.

Une classe $CL_i$ d'eau est également par exemple un ensemble d'eaux brutes pour lesquelles la relation entre la DMEA et la valeur pour l'eau brute du second paramètre organique $P_{ORG2}$ est définie par un ensemble de troisièmes relations linéaires $R_{i3}$, et pour lesquelles la DMEA est indépendante du pH de coagulation pHc.

La dose maximale économiquement admissible de coagulant (DMEA) est définie dans la présente description comme étant la dose de coagulant au-delà de laquelle l'ajout de coagulant n'est plus intéressant comparé à son coût. Lorsque cela est possible, elle peut être calculée comme étant la dose de coagulant à partir de laquelle le coût de traitement au coagulant devient supérieur au coût du traitement par un réactif alternatif généralement plus cher (exemple au Charbon Actif en Poudre « CAP ») pour la même diminution par coagulation de matière organique exprimée en absorbance UV.

Selon un mode de réalisation préféré, la fonction est une fonction de type exponentielle pour l'ensemble des classes d'eau, du type :

[Math1]

$$y = Ae^{-B[x]} + C$$

où y est le second paramètre organique, et x la quantité de coagulant, et où les coefficients A, B et C sont déterminables par des relations données selon la classe d'eau, pour une valeur pour l'eau brute du second paramètre organique et pour un pH de coagulation.

En d'autres termes, la fonction est de même type pour toutes les classes, mais les coefficients de cette fonction sont différents selon les classes. En outre, ces coefficients sont déterminés, pour une classe d'eau, par des relations donnant lesdits coefficients en fonction du second paramètre organique de l'eau brute et/ou du pH de coagulation.

Selon un mode de réalisation particulier, le coefficient C est défini comme étant la valeur de matière organique non coagulable, pour la valeur pour l'eau brute du second paramètre organique donnée et pour un pH de coagulation donné.

Selon un mode de réalisation particulier, le coefficient C est relié à la valeur pour l'eau brute du second paramètre organique par des premières relations linéaires.

Selon un mode de réalisation particulier (alternatif ou complémentaire du mode précédent), le coefficient C est relié au pH de coagulation par une seconde relation linéaire, polynomiale ou exponentielle.

Selon un mode de réalisation particulier, le coefficient A est égal à la valeur déterminée pour l'eau brute du second paramètre organique moins le coefficient C.

Selon un mode de réalisation particulier, le coefficient B est déduit d'une valeur de dérivée seconde de la fonction, du coefficient A et de la valeur déterminée pour l'eau brute du second paramètre organique. Par exemple, la valeur de dérivée seconde de la fonction est comprise entre 0.0001 et 0.0009.

Selon un mode de réalisation particulier, la valeur de dérivée seconde de la fonction est atteinte pour une dose de coagulant égale à une dose maximale économiquement admissible, ladite dose maximale économiquement admissible étant la dose de coagulant à partir de laquelle le coût de traitement au coagulant devient supérieur au coût du traitement par un réactif alternatif, et étant déterminable par des troisièmes relations linéaires en fonction de la valeur déterminée pour l'eau brute du second paramètre organique.

De préférence, les premières et/ou secondes relations et/ou les troisièmes relations sont disponibles, pour chaque classe d'eau, dans une base de données.

Ladite base de données peut être alimentée par des essais sur des eaux différentes. Elle peut être alimentée lors de l'utilisation de la méthode.

Selon un mode de réalisation, la méthode prédictive comprend en outre la détermination d'une dose d'un second réactif, par exemple un charbon actif en poudre ou un acide, ou encore un autre coagulant, et la détermination d'une première dose de coagulant à ajouter pour atteindre la valeur cible définie pour l'eau décantée du second paramètre organique, avec le second réactif.

De manière avantageuse, la méthode prédictive comprend une étape de comparaison d'une première dose de coagulant déterminée avec le second réactif avec une première dose de coagulant déterminée sans le second réactif. Cela permet de savoir s'il est plus intéressant d'ajouter un second réactif, ou de mettre davantage de coagulant, ou de calculer le meilleur compromis entre le coagulant et le second réactif.

Selon un mode de réalisation avantageux, la méthode prédictive comprend en outre :

- une étape de définition d'une valeur cible de la turbidité pour l'eau décantée ;

- une étape de détermination d'une deuxième dose de coagulant à ajouter à l'eau brute pour atteindre la valeur cible de la turbidité pour l'eau décantée ;

- une étape de détermination de la dose optimale de coagulant à ajouter à l'eau brute, comprenant la comparaison de la première dose de coagulant et de la deuxième dose de coagulant, ladite dose optimale de coagulant à ajouter étant la dose la plus grande entre la première dose de coagulant et la deuxième dose de coagulant.

L'avantage est de s'adapter aux variations de qualité de l'eau brute, que la matière organique ou la turbidité soit prédominante.

Les différentes étapes de la méthode selon l'invention, et notamment les différentes étapes décrites ci-avant sont de préférence implémentées dans un programme d'ordinateur, ce qui permet d'avoir une méthode rapide, simple et efficace et qui permette d'avoir la juste dose de coagulant calculée en temps réel, et d'ajuster en ligne la dose optimale de coagulant tout au long du procédé de traitement de l'eau brute.

Un autre objet de l'invention est un produit programme d'ordinateur tel que décrit dans la revendication 14 et comprenant des instructions de code de programme pour l'exécution des étapes de la méthode selon l'invention, lorsque ledit programme est exécuté sur un ordinateur.

Un autre objet de l'invention est un système de définition et de régulation d'une dose de coagulant, et éventuellement d'au moins un second réactif, à injecter dans un moyen de traitement par coagulation d'une eau brute en une eau décantée tel que décrit dans la revendication 13, ledit système mettant en œuvre la méthode selon l'invention.

Un autre objet de l'invention est un procédé de traitement d'une eau brute tel que décrit dans la revendication 15 et comprenant au moins une étape de coagulation de l'eau brute, la dose de coagulant injectée étant la dose de coagulant définie et régulée selon la méthode selon l'invention.

## Brève description des figures

D'autres caractéristiques, détails et avantages de l'invention ressortiront à la lecture de la description faite en référence aux figures annexées données à titre illustratif et non limitatif :

La figure 1 illustre un premier mode de réalisation pour l'étape de définition de la dose optimale de coagulant utilisant une méthode prédictive ;

La figure 2 représente une fonction permettant de calculer l'absorbance UV d'une eau en fonction de la dose de coagulant injectée ;

La figure 3 représente un exemple de répartition d'eaux en classes d'eaux, définies en fonction des concentrations en ions $Cl^-$ et $Na^+$, du Titre Alcalinométrique Complet (TAC) et du ratio $UV_{254nm}$/COD (SUVA) ;

Les figures 4A et 4B représentent des premières et secondes relations permettant de calculer la valeur de matière organique non coagulable, en fonction de l'absorbance UV de l'eau brute et en fonction du pH de coagulation, pour une classe d'eau ;

La figure 5 représente schématiquement le mode de calcul d'une dose maximale économiquement admissible de coagulant (DMEA) ;

La figure 6 représente une série de troisièmes relations linéaires permettant de calculer la DMEA en fonction de l'absorbance UV de l'eau brute, pour une classe d'eau ;

La figure 7 illustre un procédé de traitement d'eau comprenant une étape de coagulation et une étape avale ;

Les figures 8A et 8B illustrent un mode particulier de l'étape de détermination d'une première dose de coagulant, permettant d'intégrer d'autres réactifs ;

La figure 9 illustre un second mode de réalisation de l'étape de définition de la dose optimale de coagulant utilisant une méthode prédictive ;

La figure 10 illustre des quatrièmes relations permettant de déterminer une deuxième dose de coagulant ;

La figure 11 illustre le second mode de réalisation de l'étape de définition de la dose optimale de coagulant ;

Les figures 12A à 24 illustrent un système mettant en œuvre la méthode selon l'invention, selon différents exemples et variantes d'étapes de régulation (boucle de régulation) en combinaison avec l'étape de définition de la dose optimale de coagulant (méthode prédictive) ;

La figure 25 représente un logigramme simplifié d'un système mettant en œuvre un mode de réalisation particulier d'une méthode conforme à l'invention.

## Description détaillée de l'invention

Dans la description, l'invention est décrite avec l'exemple d'eau brute. Cependant, l'invention est applicable à tout autre liquide contenant de la matière organique et/ou de la turbidité.
Le coagulant peut être une solution à base de sels d'aluminium ou de fer, et comprend de préférence les composés suivants : un sulfate d'aluminium ; un (poly)chlorure d'aluminium ; un aluminate ; un chlorure ferrique ; un sulfate ferrique ; un ion ferrate de sodium ou de potassium ou une combinaison desdits composés. Une solution commerciale de coagulant est par exemple un sulfate d'aluminium à 8,2% d'alumine $Al_2O_5$ ou un chlorure ferrique à 41 % de $FeCl_3$

EP 4 087 824 B1

Etape de définition de la dose optimale de coagulation (méthode prédictive)

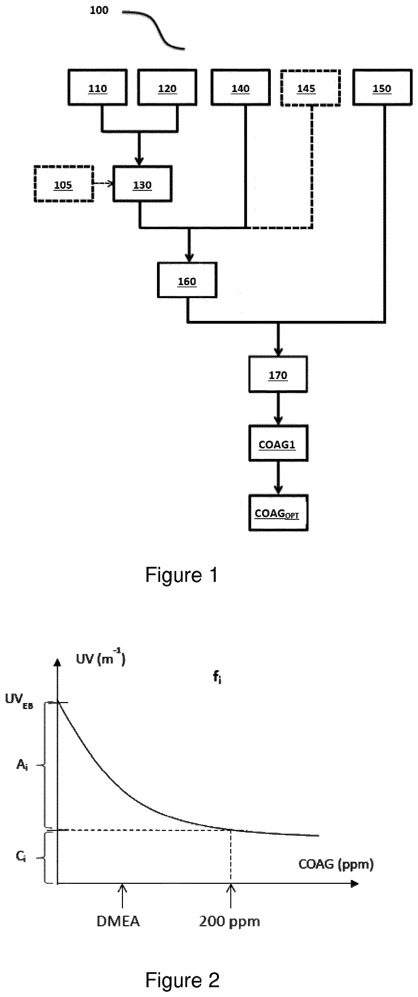

La figure 1 illustre un premier mode de réalisation de l'étape de définition de la dose optimale de coagulant à ajouter à l'eau brute, qui est une méthode prédictive comprenant les étapes suivantes décrites également par la suite :

- une étape de détermination 110 d'une valeur ($P_{ORG1\_EB}$) pour l'eau brute d'un premier paramètre organique ($P_{ORG1}$) apte à renseigner sur l'aptitude d'une eau à coaguler ;

- une étape de détermination 120 d'une valeur ($P_{MIN2\_EB}$) pour l'eau brute d'un paramètre minéral ($P_{MIN}$) apte à renseigner sur la charge minérale d'une eau ;

- une étape de détermination 130 d'une classe d'eau ($CL_{EB}$) pour l'eau brute en fonction des valeurs déterminées pour l'eau brute du premier paramètre organique et du paramètre minéral, une classe d'eau étant caractérisée par une première plage de valeurs du premier paramètre organique ($P_{ORG1}$) et une seconde plage de valeurs du paramètre minéral ($P_{MIN}$) ;

- une étape de détermination 140 d'une valeur ($P_{ORG2\_EB}$) pour l'eau brute d'un second paramètre organique ($P_{ORG2}$), ledit second paramètre étant apte à renseigner sur la quantité de matière organique d'une eau ;

- une étape de définition 150 d'une valeur cible ($P_{ORG2\_ED}$) pour l'eau décantée du second paramètre organique ($P_{ORG2}$) ;

- une étape de sélection 160 d'une fonction ($f_i$) apte à établir une relation entre le second paramètre organique ($P_{ORG2}$) et une dose de coagulant ([COAG]) ajoutée à l'eau brute, ladite fonction étant sélectionnée pour la classe d'eau ($CL_{EB}$) déterminée pour l'eau brute et pour la valeur ($P_{ORG2\_EB}$) déterminée pour l'eau brute du second paramètre organique ($P_{ORG2}$) ;

- une étape d'utilisation 170 de la fonction ($f_i$) sélectionnée, de manière à déterminer une première dose de coagulant ([COAG1]) correspondant à la valeur cible ($P_{ORG3-ED}$) définie pour l'eau décantée du second paramètre organique ($P_{ORG3}$).

Selon ce premier mode, la dose optimale de coagulant est la première dose de coagulant.
Selon un exemple de réalisation particulier, le second paramètre $P_{ORG2}$ organique est l'absorbance UV à 254 nm exprimée en $m^{-1}$. Il peut être nommé « UV » dans l'ensemble de la description.
L'absorbance UV (typiquement UV à 254 nm) est une mesure physique qui permet d'évaluer la matière organique contenue dans l'eau. L'absorbance UV se mesure à l'aide d'un spectrophotomètre UV (typiquement à 254 nm) où l'échantillon est placé dans une cellule en quartz transparente aux UV d'une épaisseur de l'ordre du cm, par exemple de 1 cm, 3 cm, 5 cm ou 10 cm. La mesure est plus simple, et en général plus économique que la mesure du COT (Carbone Organique Total) voire que le COD (Carbone Organique Dissous). Cette méthode par photométrie donne un résultat en $m^{-1}$, correspondant à la perte d'intensité lumineuse à la longueur d'onde choisie (typiquement de 254 nm) à travers un échantillon d'eau dans la cellule de 1 cm d'épaisseur. La matière organique ainsi détectée contient des cycles aromatiques et des doubles liaisons comme notamment les acides humiques. Ces matières organiques aromatiques sont particulièrement bien éliminées en coagulation.
Selon un autre exemple de réalisation, le second paramètre $P_{ORG2}$ organique est le COD.
Pour chaque classe d'eau $CL_i$, l'UV ou le COD est une fonction ($f_i$) de la dose de coagulant.
Pour plus de facilité de lecture, on parlera dans la suite de la description d'absorbance UV ou d'UV, sachant qu'il peut s'agir alternativement de mesure de COD, ou d'un autre second paramètre organique.
Les différentes étapes sont détaillées plus après dans la description, à travers des modes de réalisation et exemples non limitatifs.
Il peut y avoir en outre une étape préliminaire 105 de détermination d'une pluralité de classes d'eau.
Il peut y avoir en outre une étape de détermination 145 du pH de coagulation pHc, la fonction $f_i$ étant en outre sélectionnée pour le pH de coagulation.
D'autres étapes, non illustrées dans la figure 1, peuvent être ajoutées. Elles sont décrites notamment dans la suite de la description.
La figure 2 illustre le mode de réalisation préféré dans lequel la fonction $f_i$ sélectionnée lors de l'étape de sélection 160 est une fonction de type exponentielle :

[Math2]

$$f_i([COAG]) = A_i e^{-B_i[COAG]} + C_i$$

où COAG est la dose de coagulant ajoutée, exprimée en ppm.

L'étape de sélection 160 de la fonction $f_i$ comprend alors une étape de détermination des coefficients $A_i$, $B_i$, $C_i$.

Le coefficient $C_i$ correspond à la matière organique résiduelle exprimée en absorbance UV (également nommée « UV résiduel » dans la présente description ou « UV non coagulable ») lorsque la dose de coagulant a atteint un seuil maximal d'efficacité, typiquement lorsque la dose de coagulant est supérieure à 200 ppm de solution, exprimé en ppm de solution commerciale.

$A_i$ correspond à la matière organique, par exemple exprimée en absorbance UV, éliminée par coagulation lorsque la dose de coagulant a atteint un seuil maximal d'efficacité, typiquement lorsque la dose de coagulant est supérieure à 200 ppm de solution, exprimé en ppm de solution commerciale.

En outre, $A_i$, $C_i$ et l'$UV_{EB}$ sont reliés par l'équation :

[Math3]

$$UV_{EB} = A_i + C_i$$

où $UV_{EB}$ est la matière organique de l'eau brute exprimée en absorbance UV.

$B_i$ est un coefficient donnant l'allure de la fonction de type exponentielle.

$A_i$, $B_i$ et $C_i$ sont obtenus par des relations données pour chaque classe d'eau $CL_i$, ces relations ($R_{i1}$, $R_{i2}$ et $R_{i3}$) permettant de déduire $A_i$, $B_i$ et $C_i$ à partir du pH de coagulation (pHc) et de la matière organique de l'eau brute ($UV_{EB}$) exprimée en absorbance UV. Ces relations sont de préférence disponibles dans des bases de données liées aux classes d'eau.

Pour sélectionner la fonction $f_i$, et notamment pour déterminer les coefficients dans le cas d'une fonction de type exponentiel de formule Math1, il est nécessaire de déterminer (étape de détermination 130) la classe d'eau à laquelle appartient l'eau brute.

Selon un exemple de réalisation préféré, une eau brute s'identifie à une classe d'eau par l'analyse de ses matrices organique et minérale suivantes :

- la matrice organique est définie par les paramètres organiques suivants : SUVA (qui est le rapport entre l'absorbance UV à 254 nm exprimée en m-1 et le COD exprimé en mg/l) et optionnellement la répartition du COD par chromatographie liquide (en anglais « LC-OCD » pour « Liquid Chromatography-Organic Carbon Detection ) ;
- la matrice minérale est définie par les paramètres minéraux suivants : le Titre Alcalinométrique Complet (TAC), la concentration en ions chlorure et/ou en ions sodium, et optionnellement la conductivité, la concentration en ions silicates, en ions calcium, en ions magnésium, en ions sulfates, le bilan ionique.

La détermination des valeurs des paramètres des matrices organique et minérale (étapes de détermination 110 et 120) peut être réalisée par une analyse en ligne ou par échantillonnage, ou peut être une récupération de données déjà disponibles pour l'eau brute à traiter.

Selon l'exemple de réalisation préféré, le premier paramètre organique ($P_{ORG1}$) comprend donc a minima le SUVA, et le paramètre minéral ($P_{MIN}$) comprend donc a minima le TAC, ainsi que la concentration en ions chlorure et/ou en ions sodium.

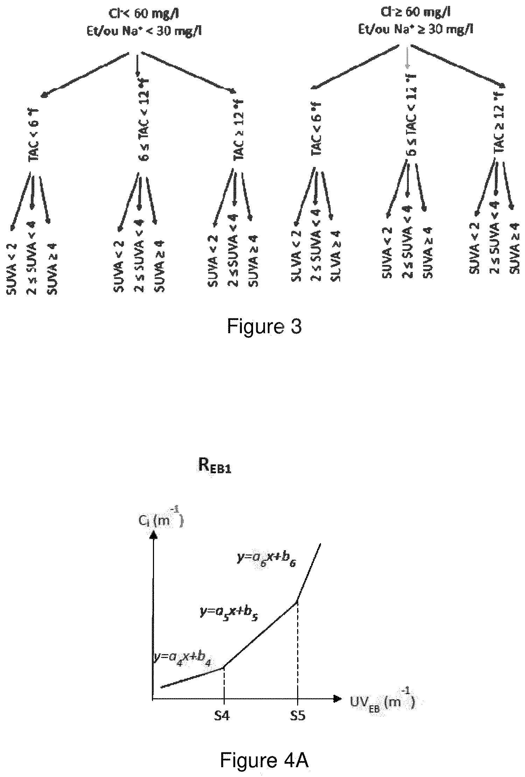

La figure 3 ou le tableau 1 ci-dessous représentent un exemple de matrices minérale et organique de classes d'eaux, définies en fonction des concentrations en ions Cl⁻ et/ou Na⁺, du TAC et du ratio $UV_{254nm}$/COD (SUVA). Les classes d'eaux sont définies en fonction des seuils suivants :

[Table 1]

|  | Seuil 1 | Seuil 2 |
|---|---|---|
| Cl⁻ et/ou Na⁺ | 60 mg/l (et/ou 30mg/l) |  |
| TAC | 6°f | 12°f |
| SUVA | 2 | 4 |

Pour la classe d'eau $CL_{EB}$ déterminée pour l'eau brute EB, on obtient des relations $R_{EB1}$, $R_{EB2}$ et $R_{EB3}$ données pour ladite classe d'eau, lesdites relations permettant de déduire les coefficients $A_{EB}$, $B_{EB}$ et $C_{EB}$ à partir du pH de coagulation (pHc) et de la matière organique de l'eau brute ($UV_{EB}$) exprimée en absorbance UV.

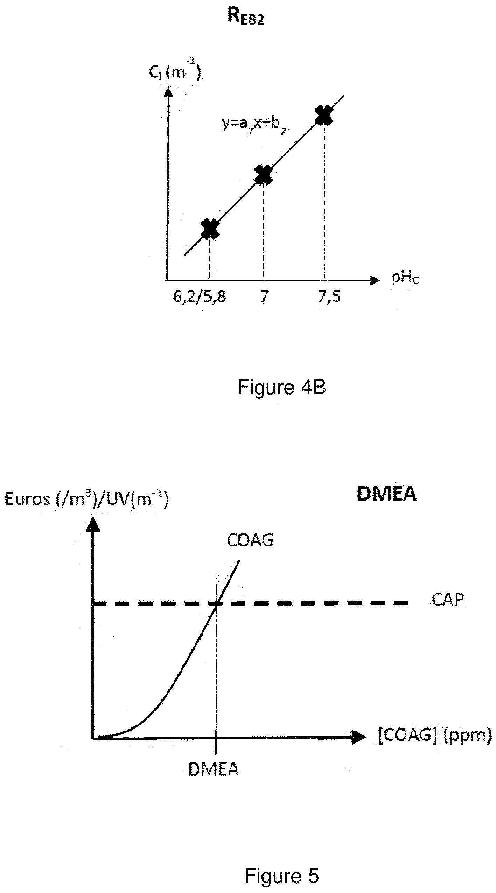

Les figures 4A et 4B représentent les premières et secondes relations $R_{EB1}$ et $R_{EB2}$ permettant de calculer la valeur de matière organique non coagulable, qui est fonction de deux variables qui sont l'absorbance UV de l'eau brute (des relations sous forme de courbes sont données pour un pH de coagulation donné) et le pH de coagulation (des relations sous forme de courbes sont données pour une valeur de l'absorbance UV de l'eau brute donnée), pour la classe d'eau $CL_{EB}$ déterminée pour l'eau brute EB. Cela permet de déterminer le coefficient $C_{EB}$.

Pour calculer la matière organique non coagulable en fonction de l'absorbance UV (ou du COD) de l'eau brute, on dispose d'une ou de plusieurs premières relations $R_{EB1}$ linéaires (trois dans l'exemple illustré) dont les coefficients $a_4$, $a_5$, $a_6$, $b_4$, $b_5$, $b_6$ varient de manière discrète en fonction de seuils ($S_4$, $S_5$) de l'absorbance UV de l'eau brute $UV_{EB}$.

La figure 4A représente trois premières relations linéaires :

$$[\text{Math. 4}]$$

$$y = a_4 x + b_4$$

jusqu'au seuil $S_4$ ;

$$[\text{Math.5}]$$

$$y = a_5 x + b_5$$

entre les seuils $S_4$ et $S_5$ ;

$$[\text{Math.6}]$$

$$y = a_6 x + b_6$$

après le seuil $S_5$.

Selon les classes d'eau, il peut y avoir une seule première relation linéaire, ou au moins deux premières relations linéaires.

Pour calculer la matière organique non coagulable en fonction du pH de coagulation pHc, on dispose en outre de secondes relations $R_{EB2}$ de type linéaire, exponentiel ou polynomial, selon la classe d'eau. Lesdites secondes relations ont des coefficients $a_7$, $b_7$, $c_7$ donnés aussi selon la classe d'eau.

La figure 4B représente une seconde relation linéaire de type :

$$[\text{Math.7}]$$

$$y = a_7 x + b_7$$

Selon les classes d'eau, la seconde relation peut être alternativement du type exponentiel :

$$[\text{Math.8}]$$

$$y = a_7 e^{(b_7 x)} + c_7$$

Encore alternativement, la seconde relation peut être du type polynomial, par exemple polynomial du second degré :

$$[\text{Math.9}]$$

$$y = a_7 x^2 + b_7 x + c_7$$

Ainsi, pour la classe d'eau $CL_{EB}$ déterminée, la détermination de l'UV de l'eau brute $UV_{EB}$ (ou du COD) et du pH de coagulation pHc permet de déterminer les coefficients $a_4$, $a_5$, $a_6$, $b_4$, $b_5$, $b_6$, $a_7$, $b_7$, $c_7$, puis la matière organique non coagulable, ce qui permet d'obtenir $C_{EB}$. Les coefficients $a_4$, $a_5$, $a_6$, $b_4$, $b_5$, $b_6$ sont dans ce cas fonction du pH de coagulation. On pourrait ne déterminer que les coefficients $a_4$, $a_5$, $a_6$, $b_4$, $b_5$, $b_6$ donnés pour un pH de coagulation fixé, et non ajusté.

On obtient ensuite $A_{EB}$ par l'équation Math3, soit $UV_{EB}$ moins $C_{EB}$.

La détermination de l'UV de l'eau brute $UV_{EB}$ (ou du $COD_{EB}$) (étape de détermination 140), ainsi que celle, optionnelle, du pH de coagulation (pHc) (étape de détermination 145), peut être réalisée par une mesure en ligne ou par échantillonnage, et/ou peut être une récupération de données déjà disponibles pour l'eau brute à traiter.

On détermine également la DMEA (Dose Maximale Economiquement Admissible) de coagulant pour déterminer le coefficient $B_i$ comme expliqué ci-après.

La DMEA est définie dans la présente description comme étant la dose au-delà de laquelle l'ajout de coagulant n'est plus intéressant comparé à son coût. Elle peut notamment être obtenue en déterminant la dose de coagulant à partir de laquelle le coût de traitement au coagulant devient supérieur au coût du traitement par un réactif alternatif généralement plus cher (exemple au Charbon Actif en Poudre « CAP ») pour obtenir la même diminution de matière organique exprimée en absorbance UV, comme cela est illustré dans la figure 5 qui fournit un coût (« COST ») en Euros par mètre cube d'eau brute et par unité de la matière organique éliminée exprimée en UV, en fonction de la dose de CAP ou de coagulant (« COAG »). La droite en pointillés correspond au CAP et la courbe en trait plein correspond au coagulant. L'intersection des deux donne la DMEA. Dans la suite de la description, ce n'est pas cette méthode qui est utilisée pour déterminer la DMEA.

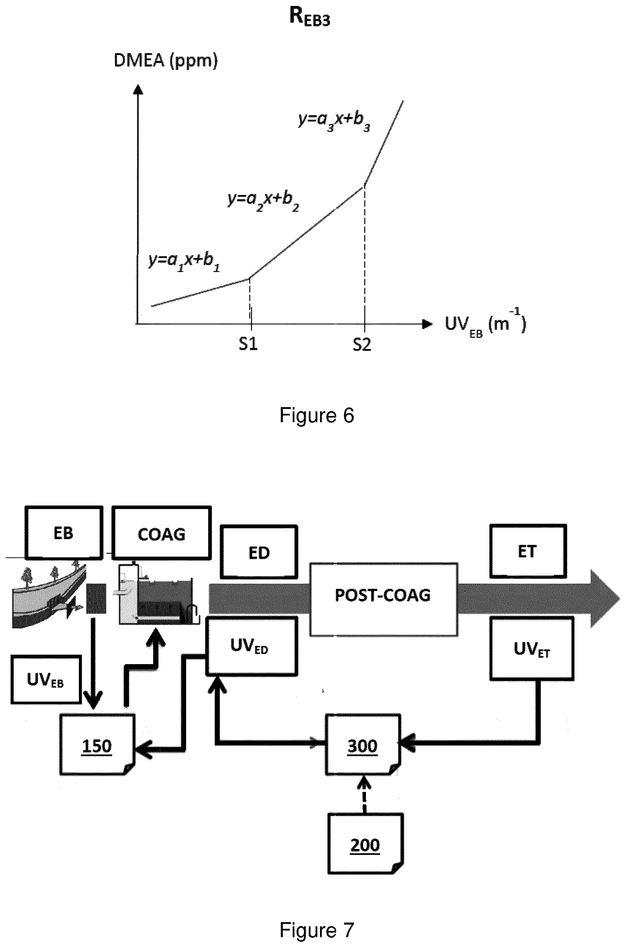

Par ailleurs, les inventeurs ont découvert que la DMEA est indépendante du pH de coagulation (pHc), mais qu'elle est fonction de l'absorbance UV (ou du COD) de l'eau brute, comme représenté en figure 6. Elle peut ainsi être obtenue de manière différente que la méthode décrite dans le paragraphe précédent.

La figure 6 représente une série de troisièmes relations $R_{EB3}$ linéaires permettant de calculer la DMEA (donnée en ppm de solution commerciale) en fonction de l'absorbance UV de l'eau brute $UV_{EB}$ (ou du COD de l'eau brute $COD_{EB}$), pour la classe d'eau $CL_{EB}$ déterminée. Il s'agit de plusieurs troisièmes relations linéaires dont les coefficients $a_1$, $a_2$, $a_3$, $b_1$, $b_2$, $b_3$ varient de manière discrète en fonction de seuils ($S_1$, $S_2$) de l'absorbance UV de l'eau brute.

La détermination de l'UV de l'eau brute $UV_{EB}$ (ou du $COD_{EB}$) permet de déterminer les coefficients $a_1$, $a_2$, $a_3$, $b_1$, $b_2$, $b_3$, puis la DMEA de l'eau brute.

Par ailleurs, selon le mode de réalisation préféré de l'invention, la DMEA est la dose de coagulant correspondant au point d'inflexion de la fonction $f_i$ et c'est ce qui permet d'obtenir le coefficient $B_i$.

La DMEA est définie mathématiquement par une valeur absolue $\alpha_i$ de la dérivée de second ordre de ladite fonction, cette valeur absolue étant par exemple comprise entre 0.0001 et 0.0009, soit

[Math10]

$$f''_i([DMEA]) = A_i B_i{}^2 e^{-B_i[DMEA]} = \alpha_i$$

Pour une classe d'eau donnée $CL_{EB}$, la valeur $\alpha_{EB}$ est déterminée en fonction de la valeur de l'UV de l'eau brute $UV_{EB}$ (ou du $COD_{EB}$), par exemple en fonction de seuils $\sigma$ d'$UV_{EB}$ comme explicités dans le tableau 2 ci-dessous donnant des exemples de valeurs de dérivée seconde en fonction de l'UV de l'eau brute.

[Table 2]

| $UV_{EB}$ | $[0-\sigma_1]$ | $[\sigma_1-\sigma_2]$ | $>\sigma_2$ |
|---|---|---|---|
| Valeur dérivé seconde | $\alpha_{EB1}$ | $\alpha_{EB2}$ | $\alpha_{EB3}$ |

Pour la classe d'eau $CL_{EB}$, et l'UV de l'eau brute $UV_{EB}$ (ou le $COD_{EB}$), on détermine le coefficient $B_{EB}$ par la relation Math.10 exprimée pour l'eau brute (avec i égal à EB), sachant qu'on a déjà déterminé $A_{EB}$ et DMEA.

[Math11]

$$f''_{EB}([DMEA]) = A_{EB}^2 B_{EB} e^{-B_{EB}[DMEA]} = \alpha_{EB}$$

On obtient ainsi, pour la classe d'eau $CL_{EB}$ déterminée pour l'eau brute, ainsi que l'$UV_{EB}$ et le pH de coagulation pHc, une fonction exponentielle

[Math12]

$$UV = f_{EB}([COAG]) = A_{EB}e^{-B_{EB}[COAG]} + C_{EB}$$

dont les coefficients $A_{EB}$, $B_{EB}$ et $C_{EB}$ ont été déterminés.

Cette fonction $f_{EB}$ permet de calculer notamment :

- la première dose de coagulant à appliquer pour atteindre une valeur cible de l'absorbance UV de l'eau décantée ($UV_{ED}$).

On définit (étape de définition 150) la valeur cible de l'absorbance UV de l'eau décantée ($UV_{ED}$) ou de la valeur en COD de l'eau décantée ($COD_{ED}$) qui correspondent au maximum de matières organiques résiduelles dans l'eau décantée recherché (ED).

Ainsi, on déduit la première dose de coagulant grâce à la fonction $f_{EB}$ (étape d'utilisation 170).

Les coefficients $A_i$, $B_i$ et $C_i$ sont donnés pour chaque type de coagulant.

La valeur cible en matières organiques résiduelles dans l'eau décantée peut en outre être définie (étape 150) en fonction des étapes avales au procédé de coagulation, par exemple elle peut être définie, dans une étape 300, en fonction d'une valeur cible en matières organiques résiduelles dans l'eau traitée (ET). L'eau traitée est définie comme étant l'eau obtenue à l'issue d'une usine de traitement d'eau.

Ainsi, comme illustré en figure 7, si on exprime les matières organiques résiduelles dans l'eau traitée par absorbance UV, on part d'un objectif à respecter en sortie d'usine ($UV_{ET}$) et de la performance d'élimination de la matière organique dans les étapes post-coagulation ($\%_{POST\text{-}COAG}$), on calcule l'objectif de qualité à respecter en eau décantée :

[Math13]

$$UV_{ED} = \frac{UV_{ET}}{(1 - \%_{POST-COAG})}$$

La performance en post-coagulation peut être calculée à partir des capteurs en ligne ou des mesures ponctuelles sur l'eau décantée et l'eau traitée.

Selon une étape 200, les données remontées des capteurs UV de l'eau décantée ED et l'eau ET traitée permettent de calculer le pourcentage d'élimination d'UV sur les étapes de traitement post-coagulation. En connaissant ce pourcentage, on peut calculer dans l'étape 300, l'UV décantée à viser pour pouvoir respecter l'objectif en sortie d'usine (UV eau traitée).

Connaissant le niveau de matière organique de l'eau brute ainsi que l'objectif d'UV à respecter en sortie de coagulation, cette étape permet de calculer la dose optimale de coagulant à appliquer pour atteindre les objectifs fixés.

La méthode prédictive peut en outre comprendre une étape de détermination d'une dose d'un autre réactif, par exemple du charbon actif en poudre (CAP), de manière à améliorer la performance du procédé de coagulation/décantation et/ou atteindre l'objectif d'élimination de la matière organique de l'eau décantée.

La méthode prédictive peut en outre comprendre une étape de calcul de la dose d'acide nécessaire pour atteindre un pH de coagulation cible. Il est en effet possible d'améliorer l'élimination de la matière organique en diminuant le pH de coagulation, typiquement par ajout d'acide dans le réacteur ou bassin de coagulation. La méthode permet notamment de récupérer les nouveaux coefficients de la fonction $f_i$ correspondants à ce nouveau pH de coagulation, et ainsi recalculer la quantité de coagulant à ajouter pour atteindre l'objectif d'élimination de la matière organique de l'eau décantée.

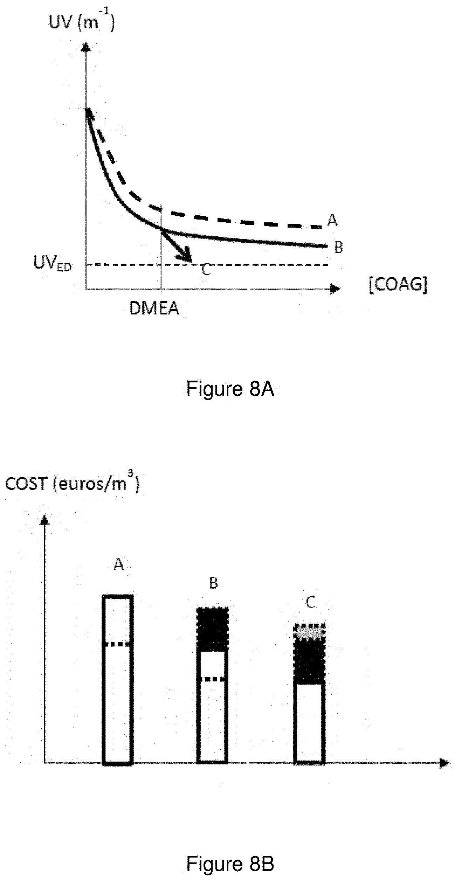

Comme illustré en figures 8A et 8B, la méthode prédictive permet en outre d'obtenir le meilleur gain économique grâce au choix des combinaisons d'un coagulant, d'un autre réactif et/ou d'acide ajouté.

La figure 8A illustre l'UV de l'eau en fonction de la dose ajoutée :

- de coagulant à un pH égal à 7 (courbe A en pointillés) ;

- de coagulant à un pH égal à 6,2 (courbe B continue) ;

- de coagulant et/ou de CAP à ajouter (flèche C) lorsque le pH de coagulation est de 6,2 pour atteindre l'UV de l'eau décantée cible ($UV_{ED}$).

La figure 8B indique le coût comparé de chaque dosage illustré en figure 8A :

-   un histogramme correspondant à la courbe A, dans laquelle le pointillé correspond à la limite de la DMEA, au-delà de la limite de la DMEA figure le coût de coagulant à rajouter pour atteindre l'objectif UV de l'eau décantée ;

-   un histogramme correspondant à la courbe B, dans laquelle le pointillé correspond à la limite de la DMEA, au-delà de la limite de la DMEA figure le coût de coagulant à rajouter pour atteindre l'objectif UV de l'eau décantée, et est ajouté le coût du produit pour atteindre le pH de 6,2 (en noir) ;

-   un histogramme correspondant à la courbe C, dans laquelle est ajouté le coût du produit pour atteindre le pH de 6,2 (en noir) et le coût de PAC à rajouter pour atteindre l'objectif UV de l'eau décantée.

Le coût total pour atteindre l'objectif UV de l'eau décantée en ajoutant le CAP et l'acide au coagulant, est dans ce cas inférieur au coût total pour atteindre l'objectif UV de l'eau décantée sans CAP et sans acide.

Dans le cas où on ajoute de l'acide pour faire baisser le pH de coagulation, la méthode prédictive permet, en recalculant la quantité de coagulant à ajouter pour atteindre l'objectif d'élimination de la matière organique de l'eau décantée, de calculer la baisse de quantité de coagulant à ajouter, le gain de cette différence, et de réaliser la comparaison avec le coût d'acide ajouté. Cela permet de savoir s'il est plus intéressant d'ajouter de l'acide, ou d'injecter d'avantage de coagulant, ou de calculer le meilleur compromis entre les deux.

En outre, dans le cas où on ajoute du charbon actif en poudre, la méthode prédictive permet, en recalculant la quantité de coagulant à ajouter pour atteindre l'objectif d'élimination de la matière organique de l'eau décantée, de calculer la baisse de quantité de coagulant à injecter, le gain de cette différence, et de réaliser la comparaison avec le coût de CAP ajouté. Cela permet de savoir s'il est plus intéressant d'ajouter du CAP, ou d'injecter d'avantage de coagulant, ou de calculer le meilleur compromis entre les deux.

Il est en outre possible de combiner l'ajout de CAP et l'ajout d'acide, et de calculer le calcul du gain (ou de la perte) économique lorsqu'on ajoute du CAP et de l'acide. La méthode prédictive peut ainsi permettre d'obtenir la meilleure combinaison de réactifs disponibles pour atteindre le plus bas coût.

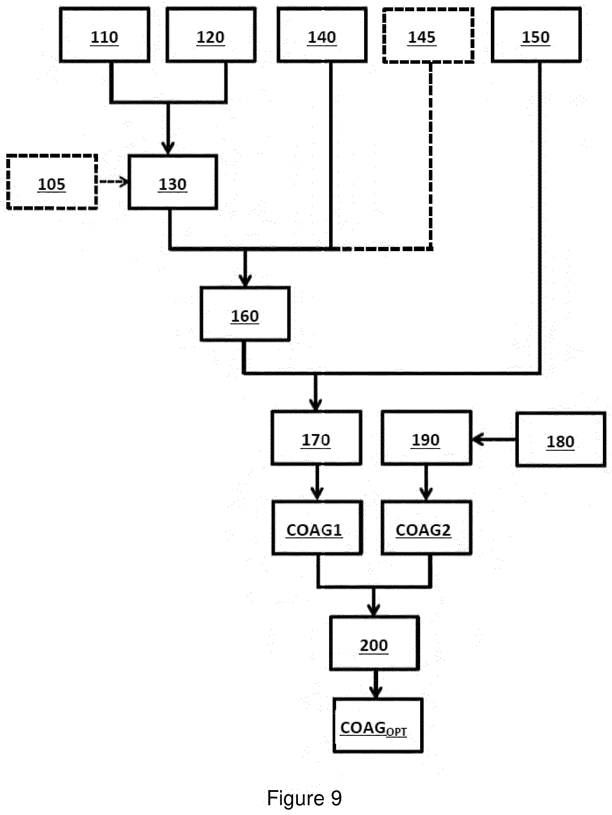

La figure 9 illustre un second mode de réalisation de l'étape de définition de la dose de coagulant optimale selon une méthode prédictive. Selon le mode illustré, la méthode prédictive comprend en outre les étapes suivantes :

-   une étape 180 de définition d'une valeur cible ($TURB_{ED}$) de la turbidité pour l'eau décantée ;

-   une étape 190 de détermination d'une deuxième dose de coagulant ($[COAG2]$) à ajouter à l'eau brute (EB) pour atteindre la valeur cible ($TURB_{ED}$) de la turbidité pour l'eau décantée ;

-   une étape 200 de détermination de la dose optimale de coagulant ($[COAG]_{OPT}$) à ajouter à l'eau brute, comprenant la comparaison de la première dose de coagulant ($[COAG1]$) et de la deuxième dose de coagulant ($[COAG2]$), ladite dose optimale étant la dose la plus grande entre la première dose de coagulant ($[COAG1]$) et la deuxième dose de coagulant ($[COAG2]$).

Selon ce second mode de méthode prédictive, le second paramètre organique est de préférence l'UV.

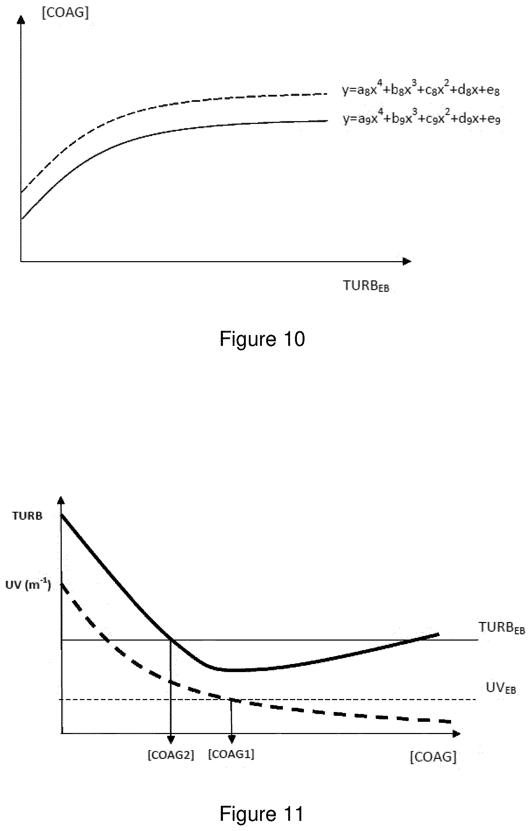

La figure 10 illustre des quatrièmes relations permettant de déterminer une deuxième dose de coagulant. Les quatrièmes relations donnent la dose de coagulant à ajouter pour atteindre une valeur de turbidité de l'eau décantée au moins inférieure à 5 NTU et de préférence inférieure à 3 NTU.

Les quatrièmes relations sont fonction de la turbidité de l'eau brute ($TURB_{EB}$), et de la température de l'eau brute ($T_{EB}$).

Ainsi, la figure 10 illustre deux quatrièmes relations du type polynomial, par exemple du quatrième degré reliant la dose de coagulant nécessaire pour obtenir une turbidité d'eau décantée au moins inférieure à 5 NTU et de préférence inférieure à 3 NTU à la turbidité de l'eau brute ($TURB_{EB}$), dont les coefficients varient en fonction de de la température de l'eau brute ($T_{EB}$) :

-   une équation polynomiale :

[Math.14]

$$y = a_8 x^4 + b_8 x^3 + c_8 x^2 + d_8 x + e_8$$

lorsque la température de l'eau brute est inférieure à un seuil θ (courbe en pointillés) ; ou

- une équation polynomiale :

[Math.15]

$$y = a_9 x^4 + b_9 x^3 + c_9 x^2 + d_9 x + e_9$$

lorsque la température de l'eau brute est supérieure au seuil θ (courbe en continu) ;

où les coefficients $a_8$ et $a_9$ sont différents, et/ou les coefficients $b_8$ et $b_9$ sont différents, et/ou les coefficients $c_8$ et $c_9$ sont différents, et/ou les coefficients $d_8$ et $d_9$ sont différents, et/ou les coefficients $e_8$ et $e_9$ sont différents.

Alternativement, la dose de coagulant nécessaire pour obtenir une turbidité d'eau décantée peut être donnée par une formule logarithmique suivante :

[Math.16]

$$y = A \times (\ln x)^C + B$$

Où A représente l'amplitude globale de la réponse, B est un coefficient qui peut être ajusté en fonction de la température de l'eau, et C est un coefficient qui permet d'ajuster le tassement de la courbe sur les fortes turbidités.

Cette formule peut être plus précise dans la mesure où elle évite les effets de bord provoquant des oscillations qui apparaissent lorsqu'on utilise une formule polynomiale.

La deuxième dose de coagulant est obtenue en mesurant la turbidité de l'eau brute à l'aide d'un capteur en ligne de turbidité et en mesurant la température à l'aide d'un capteur de température et en utilisant les fonctions définies ci-dessus pour définir la dose de coagulant nécessaire pour éliminer la turbidité.

La figure 11 illustre le second mode de réalisation de la méthode prédictive, dans le cas où la première dose de coagulant [COAG1] calculée pour atteindre l'objectif de matière organique de l'eau décantée (exprimée en UV) est supérieure à la deuxième dose de coagulant [COAG2] calculée pour diminuer l'objectif en turbidité de l'eau décantée. La dose optimale de coagulant est dans ce cas la première dose de coagulant qui permet de diminuer à la fois la matière organique et la turbidité selon les objectifs fixés.

Selon l'invention, pour le procédé de traitement de l'eau brute, des capteurs en ligne ou des mesures ponctuelles permettent de mesurer au moins un paramètre organique de l'eau pour déterminer la quantité de matière organique contenue dans l'eau brute et dans l'eau décantée, ou encore dans l'eau à différents niveaux du procédé de traitement. De tels capteurs ou des mesures ponctuelles peuvent avantageusement suivre en ligne la qualité de l'eau tout au long du procédé de traitement de l'eau. La dose optimale de coagulant définie dans l'étape de définition est ajustée dans le procédé de traitement par coagulation/décantation grâce à l'étape de régulation, qui est mise en œuvre en fonction du résultat de ces mesures.

Notamment, il est procédé à une mesure pour déterminer la valeur réelle de quantité de matière organique ((second) paramètre organique) contenue dans l'eau décantée (ED), et cette valeur réelle est comparée avec la valeur cible en quantité de matière organique ((second) paramètre organique) dans l'eau décantée. Il est de préférence procédé à plusieurs mesures de matière organique dans l'eau décantée pour déterminer plusieurs valeurs réelles et les comparer au cours du procédé avec la valeur cible. Généralement dans les installations de traitement de l'eau, la mesure de l'eau décantée est réalisée en continu.

Les mesures de la quantité de matière organique dans l'eau décantée, en général l'absorbance UV à 254 nm exprimée en $m^{-1}$, peuvent être réalisées à différents endroits stratégiques selon le dispositif (réacteur, bassin) utilisé pour réaliser la coagulation / décantation :

- pour un bassin de coagulation / décantation à lit de boues (incluant généralement du CAP) dans lequel l'eau brute doit traverser le lit pour en ressortir décantée au-dessus du lit, il est avantageux de disposer au moins un capteur UV au-dessus du lit de boues ;

- dans d'autres cas, un capteur UV peut être disposé plus en amont dans le bassin de coagulation / décantation, par exemple au niveau du mélange des coagulants/réactif.

L'homme du métier saura adapter l'implantation d'un ou de plusieurs capteurs UV (ou COD) de manière à optimiser le lien entre dosage de coagulant et mesure de l'eau décantée représentative du dosage.

En outre, il est de préférence procédé à plusieurs mesures dans le temps de la quantité de matière organique ((second) paramètre organique) dans l'eau brute, de manière à déterminer la variation dans le temps de la quantité de matière organique dans ladite eau brute. En effet, selon un mode de réalisation avantageux, en cas de variation supérieure à un seuil défini, l'étape de régulation n'est pas enclenchée et la dose de coagulant reste la dose de coagulant optimale déterminée par la méthode prédictive. Généralement dans les installations de traitement de l'eau, la mesure de l'eau brute est réalisée en continu.

Enfin, il est de préférence procédé à au moins une mesure du pH de l'eau décantée.

Le coagulant est avantageusement injecté par une pompe de type pompe doseuse, reliée à la boucle de régulation. Il en est de même pour les autres réactifs liés à la boucle (CAP par exemple).

Etape de régulation de la dose de coagulant (méthode rétroactive)

Dans la description qui suit, le paramètre $P_{ORG}$ organique qui permet de caractériser la quantité de matière organique (MO) de l'eau décantée ou de l'eau brute est l'absorbance UV à 254 nm exprimée en $m^{-1}$, et nommée « UV » dans l'ensemble de la description. Les étapes de régulation sont donc décrites en utilisant l'UV. Alternativement, les mêmes étapes que celles décrites pourraient être décrites en remplaçant UV par COD ou par tout autre paramètre organique qui permet de caractériser la quantité de matière organique (MO) dans l'eau.

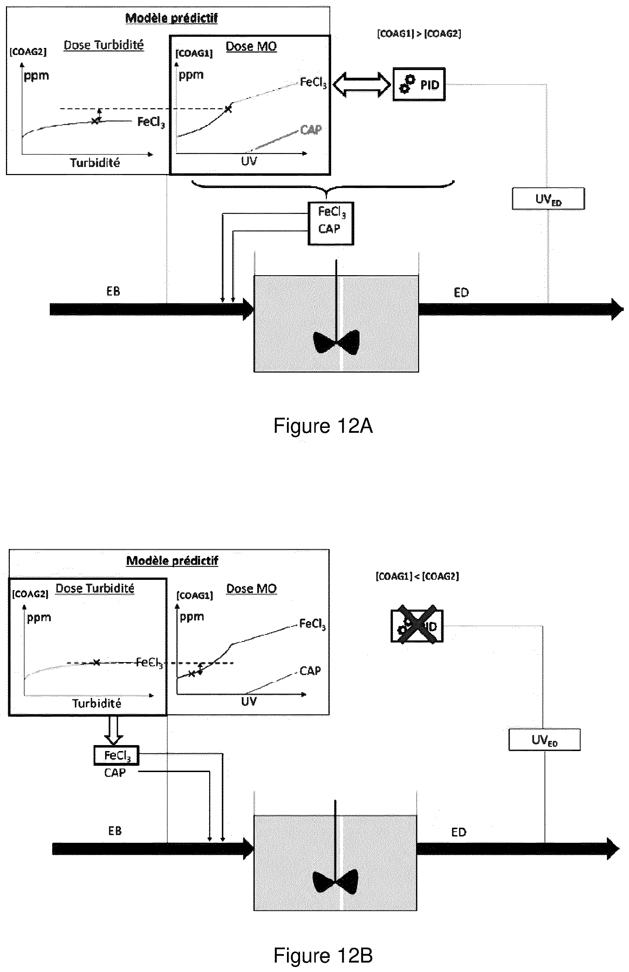

Les figures 12A à 24 illustrent un système mettant en œuvre la méthode selon l'invention, et ce, selon différents cas gérés par l'étape de régulation (boucle de régulation) et/ou par l'étape de définition d'une dose de coagulant (méthode prédictive) :

- EB et ED désignent respectivement l'eau brute et l'eau décantée ;

- FeCl$_3$ désigne le coagulant ;

- CAP désigne le charbon actif en poudre (second réactif) ;

- « Dose MO » désigne la première dose de coagulant (en ppm) définie pour atteindre la valeur cible en Matière Organique (MO) pour l'eau décantée ; la MO est mesurée avec l'absorbance UV ou « UV » ;

- « Dose turbidité » désigne la deuxième dose de coagulant (en ppm) définie pour atteindre la valeur cible de la turbidité pour l'eau décantée ;

- « PID » désigne la boucle de régulation utilisée dans l'étape de régulation.

La plus grande valeur parmi la première dose de coagulant [COAG1] ou la deuxième dose de coagulant [COAG2] permet de définir la dose optimale de coagulant. Généralement, la dose optimale de coagulant est la première dose de coagulant (i.e. la dose de coagulant définie pour atteindre la valeur cible en MO pour l'eau décantée) comme illustré en figure 12A (où [COAG1] est supérieure à [COAG2]).

Les figures 12A et 12B illustrent un mode préféré où seule la première dose de coagulant (déterminée par la MO) est utilisée pour la boucle de régulation, et non la deuxième dose de coagulant (déterminée par la turbidité). En effet, si [COAG2] est supérieure à [COAG1], on voit que la boucle de régulation n'est pas mise en œuvre.

Selon l'exemple illustré dans les figures 12A, 12B et les suivantes, les mesures de matière organique de l'eau décantée (mesure par l'absorbance UV) servent de paramètre de régulation. La mesure de MO dans l'eau décantée a en effet un lien direct avec l'injection du coagulant (mélange, quantité et type de coagulant) ce qui en fait un paramètre adapté à la régulation du coagulant. En revanche, la turbidité de l'eau décantée est la conséquence de facteurs plus variés, par exemple les conditions hydrauliques, le type et la géométrie du décanteur (...) qui peuvent aussi impacter la turbidité de l'eau en sortie du décanteur. Elle est donc moins adaptée comme paramètre de régulation du coagulant. Comme décrit par la suite, d'autres paramètres de régulation peuvent être ajoutés, comme la variation dans le temps de la MO dans l'eau brute, et/ou le pH de l'eau décantée.

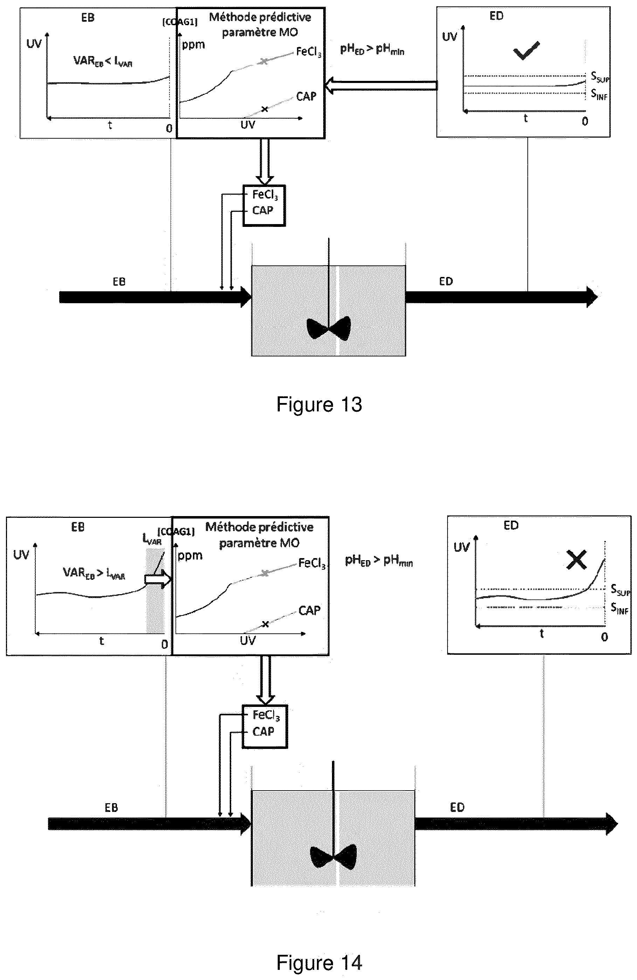

Dans les figures 13 à 24, la fonction de la méthode prédictive (fonction reliant l'UV de l'eau obtenue à la quantité de coagulant ajoutée en ppm) est encadrée et disposée au milieu. La fonction est par exemple la fonction $f_i$ ($f_{EB}$) telle que décrite précédemment (formules Math.2 et Math.12). Elle permet de définir une dose de coagulant optimale pour une valeur cible de MO dans l'eau décantée. La MO est un paramètre de régulation. La courbe encadrée à gauche de la fonction de prédiction montre l'évolution dans le temps de la MO de l'eau brute (EB) mesurée par absorbance UV. La courbe encadrée à droite montre l'évolution dans le temps de la MO de l'eau décantée (ED) mesurée par absorbance UV. Lorsque cette courbe est encadrée en gras, cela signifie que la boucle de régulation (PID) fonctionne. Lorsque la fonction de prédiction est encadrée en gras, cela signifie que la dose de coagulant est celle définie par la méthode prédictive.

La figure 13 illustre le cas où l'eau brute ne présente pas de forte variation de MO dans le temps et où la MO mesurée dans l'eau décantée est comprise entre le seuil inférieur ($S_{INF}$) et le seuil supérieur ($S_{SUP}$) par rapport à la valeur cible utilisée dans la méthode prédictive pour déterminer la dose de coagulant optimale [COAG]$_{OPT}$. On maintient donc la dose optimale de coagulant qui peut être la première dose de coagulant [COAG1] ou la deuxième dose de coagulant [COAG2] si celle-ci est supérieure à la première dose. En d'autres termes, la boucle de régulation n'est pas enclenchée.

Un exemple de seuil inférieur (S$_{INF}$) peut être -0,2 m$^{-1}$ et de seuil supérieur (S$_{SUP}$) peut être de 0,2 m$^{-1}$. Les valeurs cibles en l'UV de l'eau décantée peuvent varier entre 2 et 5 m$^{-1}$.

La figure 14 illustre le cas où l'eau brute présente une forte variation (VAR$_{EB}$) de MO dans le temps (supérieure à la limite définie (L$_{VAR}$)) et où la MO mesurée dans l'eau décantée devient supérieure au seuil supérieur (S$_{SUP}$) par rapport à la valeur cible utilisée dans la méthode prédictive. Du fait de cette variation forte dans le temps, la méthode prédictive prend le pas, et on maintient donc la dose optimale de coagulant. La boucle de régulation n'est pas enclenchée. En effet, la régulation, ou plus exactement l'effet de la régulation de la dose de coagulant sur l'eau décantée, n'est en effet généralement pas assez rapide pour permettre une régulation optimale.

Un exemple de limite de variation (L$_{VAR}$) peut être de 0,1 m$^{-1}$ par minute et la mesure de la variation peut être faite sur une durée de 10 minutes.

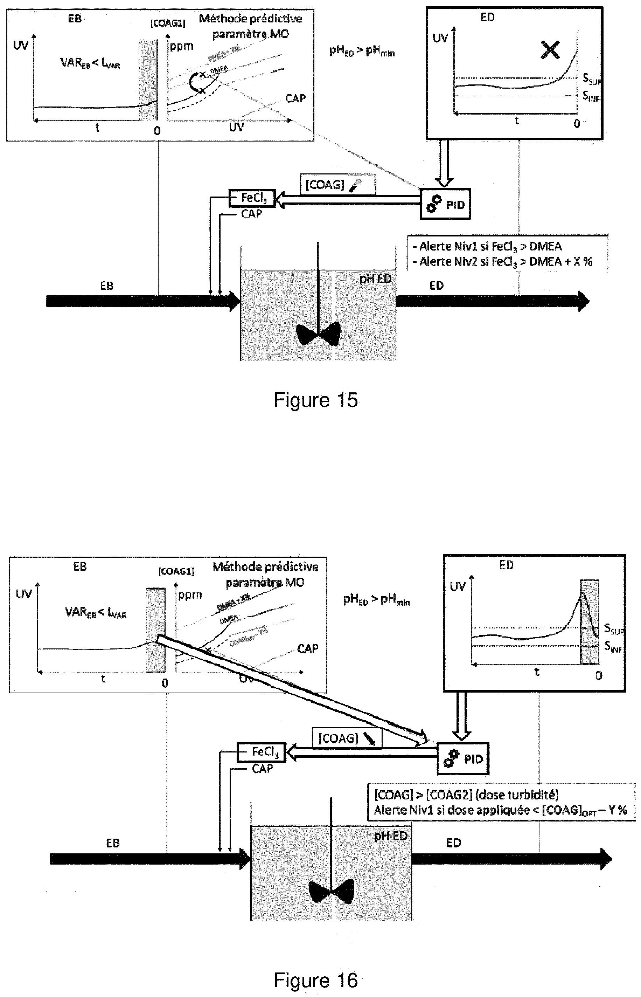

La figure 15 illustre le cas où l'eau brute présente une faible variation (VAR$_{EB}$) de MO dans le temps (inférieure à la limite définie (L$_{VAR}$)) et où la MO mesurée dans l'eau décantée devient supérieure au seuil supérieur (S$_{SUP}$) par rapport à la valeur cible utilisée dans la méthode prédictive. Dans ce cas, la boucle de régulation augmente la dose de coagulant. La dose de coagulant peut être augmentée jusqu'à une valeur donnée qui est par exemple la valeur de la DMEA définie plus avant. La DMEA peut être calculée par les troisièmes relations définies en rapport avec la figure 6. Dès que la valeur de DMEA est dépassée, la boucle de régulation peut lever une alerte de premier niveau (Niv 1) qui est seulement une information à l'exploitant. Si par contre la dose de coagulant dépasse la DMEA d'une valeur X à définir par l'exploitant, une alerte de second niveau (Niv 2) peut être déclenchée pour une intervention, par exemple pour faire venir un agent d'astreinte. La boucle de régulation peut aussi bloquer l'ajout de coagulant au-delà d'un certain seuil.

Comme illustré en figure 16, lorsque la MO mesurée dans l'eau décantée redevient inférieure au seuil supérieur (S$_{SUP}$), voire si elle passe en dessous du seuil inférieur (S$_{INF}$), ce qui n'est pas représenté, la boucle de régulation peut faire diminuer la dose de coagulant, mais celle-ci doit rester supérieure à la deuxième dose de coagulant [COAG2] (déterminée pour atteindre la cible de turbidité de l'eau décantée). En outre, la boucle de régulation peut lever une alerte de premier niveau (Niv 1) qui est une information à l'exploitant lorsque la dose de coagulant devient inférieure à une dose de coagulant optimale [COAG]$_{OPT}$ moins une valeur Y à définir par l'exploitant.

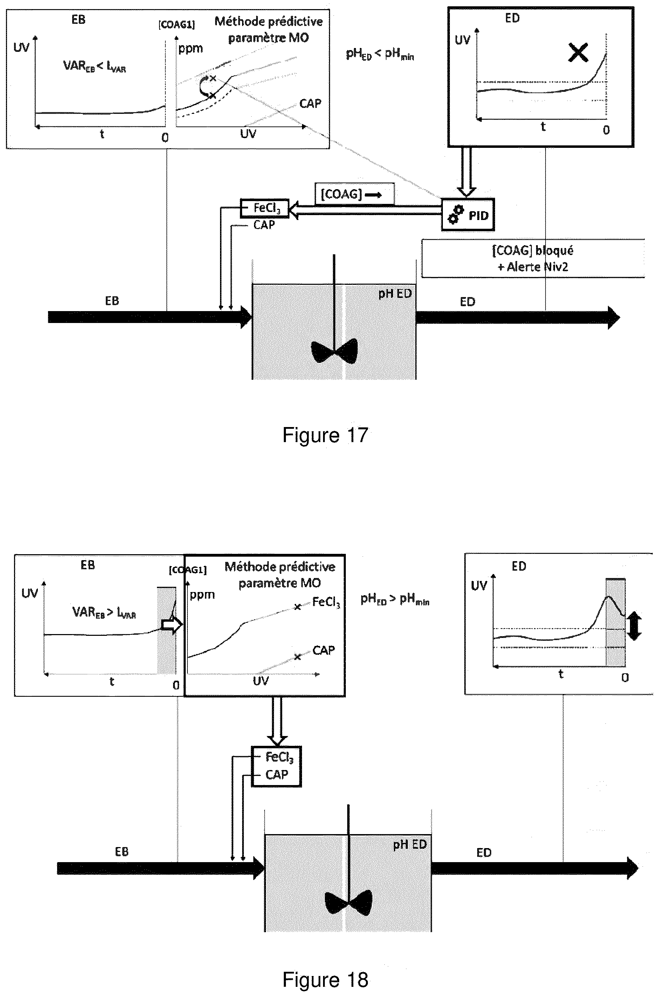

En outre, le pH$_{ED}$ de l'eau décantée est de préférence mesuré. L'ajout de coagulant peut en effet faire baisser le pH de l'eau décantée, puis dans tout le procédé de traitement de l'eau, ce qui peut avoir des conséquences sur la qualité de l'eau traitée. Ainsi, la boucle de régulation peut bloquer l'ajout de coagulant lorsque le pH$_{ED}$ mesuré devient inférieur à un seuil pH$_{min}$. Ceci est illustré en figure 17. Une alerte de second niveau (Niv 2) peut être déclenchée pour une intervention, par exemple pour faire venir un agent d'astreinte.

Comme illustré en figure 18, la boucle de régulation est arrêtée si l'eau brute présente une variation (VAR$_{EB}$) de MO forte dans le temps (supérieure à la limite définie (L$_{VAR}$)) et ce, même si la MO mesurée dans l'eau décantée est encore supérieure au seuil supérieur (S$_{SUP}$). Ainsi, la dose de coagulant injectée redevient la dose de coagulant optimale [COAG]$_{OPT}$ définie par la méthode prédictive.

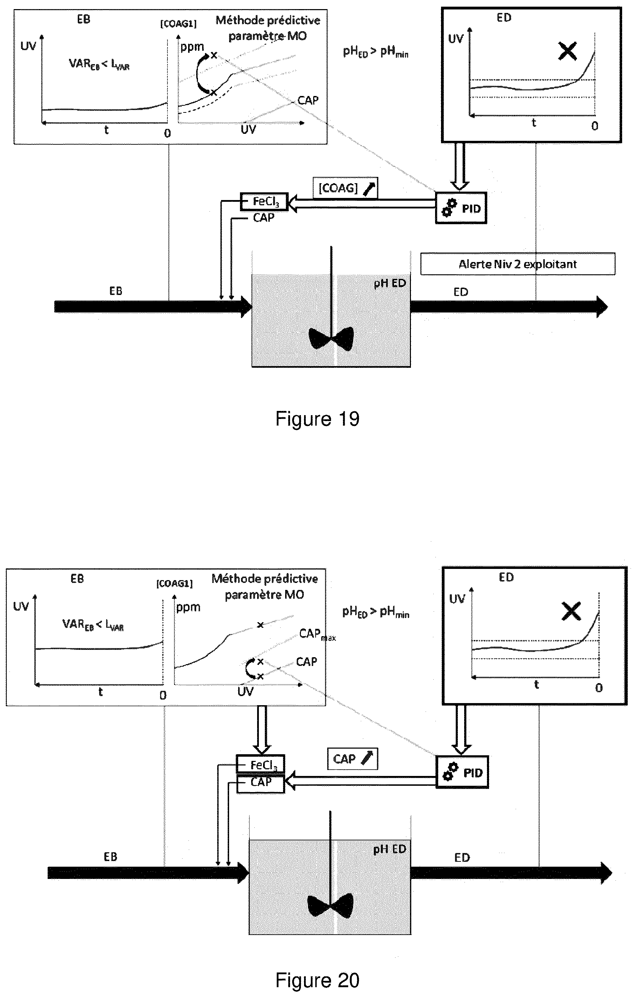

La figure 19 illustre le cas où la dose de coagulant dépasse la DMEA d'une valeur X à définir par l'exploitant, et où une alerte de second niveau (Niv 2) peut être déclenchée pour une intervention, par exemple pour faire venir un agent d'astreinte. La dose de coagulant peut être encore augmentée, ou alors bloquée, selon la décision de l'exploitant.

La figure 20 illustre le cas où on ajoute une dose de CAP, ou le cas où on augmente la dose de CAP, mais on n'augmente pas ou plus la dose de coagulant FeCl$_3$. Ce cas peut être utilisé par exemple si on a atteint la DMEA ou la DMEA plus la valeur X définie plus avant, ou encore si le pH$_{ED}$ de l'eau décantée est passé en dessous du seuil défini pH$_{min}$. De préférence, la dose de CAP est augmentée jusqu'à une dose CAP$_{max}$.

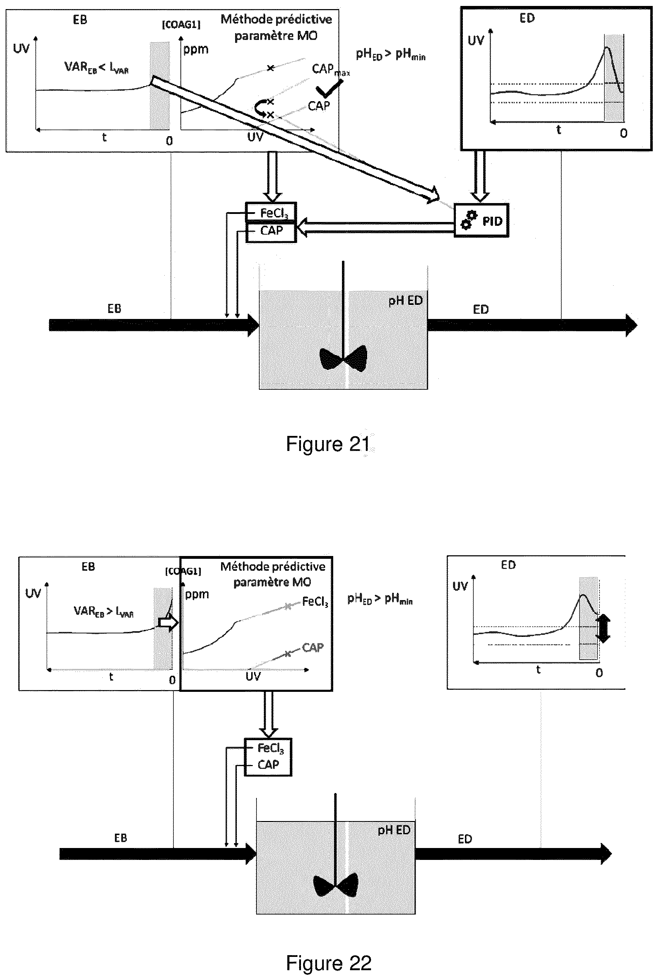

Si la MO mesurée dans l'eau décantée redevient inférieure au seuil supérieur (S$_{SUP}$) par rapport à la valeur cible, par exemple du fait de l'ajout de CAP, on maintient la boucle de régulation, comme illustré en figure 21. La dose de CAP peut être à nouveau diminuée.

Par contre, si l'eau brute présente une variation (VAR$_{EB}$) de MO forte dans le temps (supérieure à la limite définie (L$_{VAR}$)) et ce, même si la MO mesurée dans l'eau décantée est encore supérieure au seuil supérieur (S$_{SUP}$), la boucle de régulation est arrêtée, comme illustré en figure 22. Du fait de cette variation forte dans le temps, la méthode prédictive reprend le pas, et on maintient donc la dose optimale de coagulant.

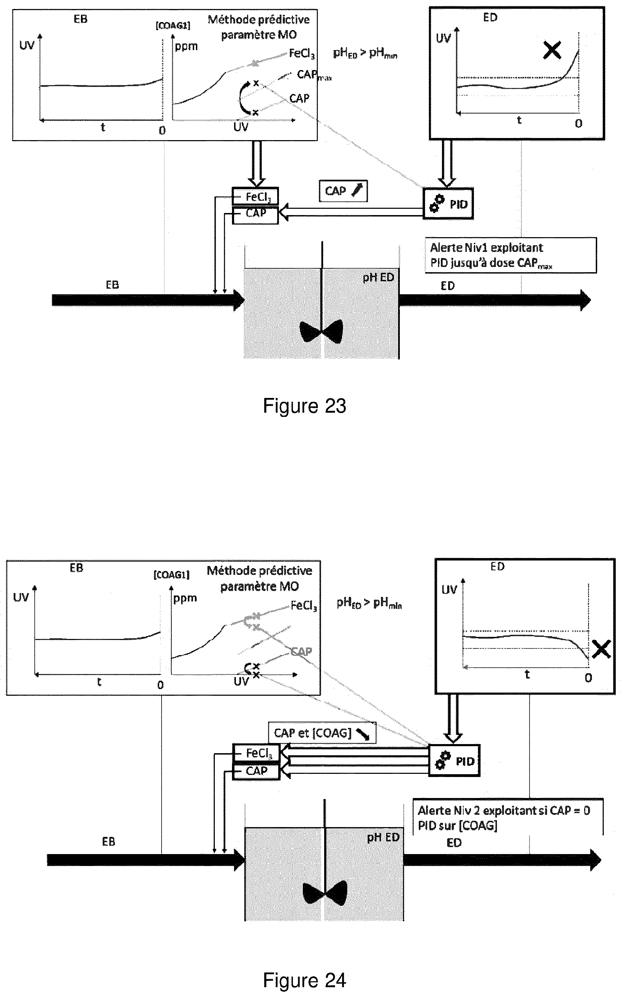

En revanche, si l'eau brute ne présente pas de forte variation de MO dans le temps et tant que la MO mesurée dans l'eau décantée reste supérieure au seuil supérieur (S$_{SUP}$), la boucle de régulation est maintenue et la dose de CAP peut augmenter, de préférence jusqu'à une valeur maximale CAP$_{max}$ définie par l'exploitant, comme illustré en figure 23. La boucle peut lever une alerte de premier niveau (Niv 1) qui est seulement une information à l'exploitant lorsque la dose de CAP dépasse cette valeur maximale, voire une alerte de second niveau (Niv2) avec intervention de l'exploitant.

Lorsque la MO mesurée dans l'eau décantée devient inférieure au seuil inférieur (S$_{INF}$) par rapport à la valeur cible utilisée dans la méthode prédictive, la boucle de régulation diminue la dose de CAP et/ou la dose de coagulant [COAG]. En figure 24 est illustré le cas où la boucle de régulation diminue la dose de CAP jusqu'à ce que celle-ci soit nulle (une alerte de premier niveau Niv1 peut être alors levée par la boucle de régulation), puis la boucle de régulation diminue la dose de coagulant. Il se peut que cela fasse remonter la MO mesurée dans l'eau décantée et on se retrouve alors dans les cas gérés par la boucle de régulation décrits ci-avant.

En partant d'une mesure de l'UV de l'eau décantée, du calcul de l'écart entre l'UV de l'eau décantée et l'UV en eau décantée cible, de mesures et/ou calculs des variations de l'UV de l'eau brute, d'une mesure du $pH_{ED}$ de l'eau décantée, et en partant d'une dose optimale de coagulant définie, un exemple d'étape de régulation est :

- si (et tant que) la variation $VAR_{EB}$ de l'UV de l'eau brute est supérieure à une limite $L_{VAR}$ alors l'étape de régulation n'est pas enclenchée ou est arrêtée, et la dose de coagulant injectée est la dose optimale de coagulant déterminée par la méthode prédictive ;
- si l'écart entre $UV_{ED}$ mesuré et $UV_{ED}$ cible est compris entre un seuil inférieur $S_{INF}$ et un seuil supérieur $S_{SUP}$, alors l'étape de régulation n'est pas enclenchée et la dose de coagulant injectée est la dose optimale de coagulant déterminée par la méthode prédictive ;
- si l'écart entre $UV_{ED}$ mesuré et $UV_{ED}$ cible est supérieur à un seuil supérieur $S_{SUP}$ ou est inférieur au seuil inférieur $S_{INF}$, et si la variation $VAR_{EB}$ de l'UV de l'eau brute est inférieure à la limite $L_{VAR}$ alors l'étape de régulation est enclenchée :

  - si l'écart entre $UV_{ED}$ mesuré et $UV_{ED}$ cible est supérieur à un seuil supérieur $S_{SUP}$ alors :

    - la dose de coagulant [COAG] est augmentée tant qu'elle est inférieure à une dose de coagulant maximale $[COAG]_{max}$ et/ou tant que le $pH_{ED}$ de l'eau décantée est en dessous du seuil défini $pH_{min}$ et/ou tant que l'écart est supérieur au seuil supérieur $S_{SUP}$ ; et/ou

    - la dose de CAP (ou autre second réactif) est augmentée tant qu'elle est inférieure à une dose de CAP maximale $CAP_{max}$ et/ou tant que l'écart est supérieur au seuil supérieur $S_{SUP}$ ;

  - si l'écart entre $UV_{ED}$ mesuré et $UV_{ED}$ cible est inférieur à un seuil inférieur $S_{INF}$ :

    - la dose de CAP (ou autre second réactif) est abaissée tant qu'elle atteint la valeur de 0 et/ou tant que l'écart est inférieur au seuil inférieur $S_{INF}$ ; et/ou
    - la dose de coagulant [COAG] est abaissée tant qu'elle est supérieure à une dose de coagulant minimale $[COAG]_{min}$ et/ou tant que l'écart est inférieur au seuil inférieur $S_{INF}$.

Lorsque l'étape de régulation est enclenchée, la dose de coagulant est ainsi déterminée par ladite étape de régulation et pas par l'étape de définition de la dose optimale de coagulant (et de même pour la dose de CAP), sauf en cas de variation de l'UV de l'eau brute supérieure à la limite définie ou sauf en cas d'intervention de l'exploitant. Cependant, l'étape de régulation peut comprendre la définition d'une temporisation permettant, une fois que l'écart entre $UV_{ED}$ mesuré et $UV_{ED}$ cible est revenu entre le seuil inférieur $S_{INF}$ et le seuil supérieur $S_{SUP}$, de redonner la main au modèle prédictif au bout de N heures (N défini par l'exploitant, par exemple entre 6 et 24 heures).

En outre, l'étape de régulation peut comprendre tout ou partie des caractéristiques suivantes :

- la dose de coagulant max peut être égale à la DMEA ou à la DMEA plus une valeur X définie par l'exploitant ;

- la dose de coagulant min peut être égale à la deuxième dose de coagulant [COAG2] définie pour atteindre la cible de turbidité de l'eau décantée, ou à une valeur égale à la première dose de coagulant [COAG1] moins une valeur Y définie par l'exploitant, tout en restant supérieure ou égal à [COAG2] ;

- la dose de coagulant peut être augmentée en priorité puis une dose de CAP peut être ajoutée ou augmentée en second lieu si nécessaire (pour prendre en compte le fait que le CAP est généralement plus cher, et qu'il peut être utilisé seulement si on ne peut plus ajouter de coagulant, parce qu'on a atteint la dose de coagulant max ou que le pH de l'eau décantée est inférieur au seuil) ;

- la dose de CAP peut être diminuée en priorité puis la dose de coagulant peut être diminuée à son tour si nécessaire (pour prendre en compte le fait que le CAP est généralement plus cher) ;

- le CAP peut être un autre second réactif, de préférence un réactif ne faisant pas baisser le pH de l'eau décantée ;

- l'étape de régulation peut comprendre une ou plusieurs alertes à des niveaux différents (information ou intervention à prévoir), en cas de dépassement de seuils de doses de coagulant ou de second réactif, en cas de dépassement de pH, en cas de variation forte de la MO de l'eau brute ...

Lorsque l'étape de régulation est activée, elle ne contrôle qu'un réactif à la fois (coagulant ou second réactif, typiquement le CAP). De ce fait, la méthode prédictive reste active et elle continue notamment à remplir une fonction de contrôle pour borner la régulation et pour définir quel réactif est ajusté par la régulation.

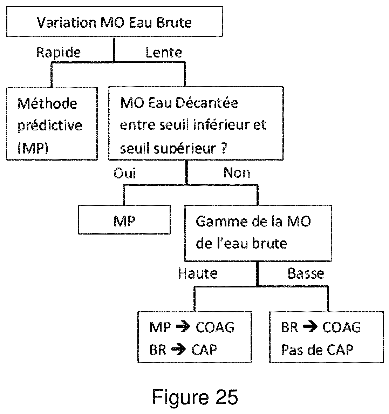

Ceci est notamment illustré dans la figure 25 qui représente un logigramme simplifié d'un système mettant en œuvre un mode de réalisation particulier d'une méthode de définition et de régulation d'une dose de coagulant, et éventuellement d'un second réactif.

Le système détermine d'abord la variation de la mesure de matière organique (MO) de l'eau brute. En cas de variation rapide, la dose de coagulant est déterminée par la méthode prédictive. En d'autres termes, la boucle de régulation (BR) n'est pas activée. La variation est considérée rapide quand, dans un intervalle de temps donné, la mesure de la valeur de matière organique augmente ou diminue plus qu'une valeur prédéfinie.

Si, par contre, la variation de la mesure de matière organique (MO) de l'eau brute est lente, alors le système détermine si la MO mesurée dans l'eau décantée est comprise entre les seuils inférieur et supérieur définis. Si c'est le cas, alors la boucle de régulation (BR) n'est pas activée, et la dose de coagulant est définie par la méthode prédictive.

Si par contre, la MO mesurée dans l'eau décantée n'est pas comprise entre les seuils inférieur et supérieur définis, alors la boucle de régulation (BR) agit, soit sur le coagulant, soit sur le second réactif, ici le CAP, en fonction de la MO de l'eau brute mesurée, et précisément selon si la MO de l'eau brute est comprise dans une gamme dite « basse » ou dans une gamme dite « haute ».

Si la MO de l'eau brute mesurée est dans la gamme basse, la boucle de régulation (BR) agit sur le coagulant, et la dose de CAP est nulle.

Si la MO de l'eau brute mesurée est dans la gamme haute, nécessitant l'ajout de CAP en complément du coagulant, alors la boucle de régulation (BR) agit sur le CAP, et la dose de coagulant est définie par la méthode prédictive.

Il est à noter que, lorsque la MO mesurée dans l'eau décantée redescend en dessous du seuil supérieur, voire en dessous du seuil inférieur, la boucle de régulation agit en priorité sur le CAP pour en diminuer la dose, puis éventuellement (si la dose de CAP est diminuée jusqu'à être nulle) agit sur la dose de coagulant pour diminuer celle-ci, tant qu'on ne remonte pas au-dessus du seuil supérieur. De préférence, la dose de coagulant est diminuée pour rester au-dessus de la deuxième dose de coagulant définie par la méthode prédictive pour atteindre la cible de turbidité de l'eau décantée.

Le seuil de MO en eau brute séparant les gammes basse et haute peut être paramétré. Il peut notamment être défini en fonction de la DMEA.

Ainsi, selon un mode de réalisation particulier, la méthode prédictive calcule régulièrement, voire en continu, la DMEA. La DMEA est calculée en fonction de la quantité de MO dans l'eau brute, par exemple de l'UV de l'eau brute, et elle peut être calculée selon une des méthodes décrites précédemment. Pour rappel, la DMEA est définie comme étant la dose de coagulant maximale, pour une quantité de MO dans l'eau brute donnée, au-dessus de laquelle il devient plus intéressant économiquement d'ajouter du CAP plutôt que de continuer à mettre du coagulant.

Deux configurations sont possibles, selon que la dose de coagulant proposée par la boucle de régulation est inférieure ou supérieure à la DMEA.

Lorsque la dose de coagulant proposée par la boucle de régulation est inférieure à la DMEA, alors le système est dans la première configuration.

Dans cette première configuration, seul le coagulant est nécessaire et la boucle de régulation contrôle le coagulant pour atteindre l'objectif en MO de l'eau décantée. Par ailleurs, la dose de coagulant générée par cette régulation reste bornée en partie basse par un seuil correspondant à la deuxième dose de coagulant nécessaire pour atteindre la cible de turbidité de l'eau décantée, et ce seuil est déterminé uniquement par la méthode prédictive.

Si la boucle de régulation augmente la dose de coagulant jusqu'à atteindre la DMEA, alors le système passe dans la deuxième configuration.

Dans cette deuxième configuration, une dose de CAP est ajoutée en complément du coagulant, et la boucle de régulation contrôle le CAP pour atteindre l'objectif en MO de l'eau décantée. La dose de coagulant est ajustée à la DMEA par la méthode prédictive. Si la boucle de régulation diminue la dose de CAP jusqu'à atteindre une dose nulle en CAP, alors le système repasse sur la première configuration.

En d'autres termes, même lorsque la boucle de régulation est activée, la méthode prédictive est toujours active car elle permet notamment de faire passer la boucle de régulation de la première à la deuxième configuration (et inversement). En effet, comme indiqué, la méthode prédictive détermine à partir de quelle dose de coagulant (DMEA) il est nécessaire d'ajouter également du CAP. Cela entraîne le changement de régulation qui agit soit sur le coagulant, soit sur le CAP.

L'étape de régulation peut intégrer par exemple une (ou des) alerte(s) dans un ou plusieurs des cas suivants :

- l'écart absolu entre la dose de coagulant corrigée par la régulation et la dose optimale de coagulant est supérieur à une valeur $\Delta_{COAG}$ ;

- l'écart absolu entre la dose de CAP corrigée par la régulation et la dose optimale de CAP est supérieur à une valeur $\Delta_{CAP}$.

Une alerte peut amener l'exploitant à vérifier :

- l'état du (ou des) capteur(s) (UV, COD) mesurant la MO de l'eau décantée et/ou de l'eau brute ;

- le mode de préparation du CAP ;

- la qualité de l'eau brute ;

ou tout autre paramètre qui pourrait influencer voire fausser l'étape de régulation.

Les différents modes, variantes et exemples de réalisation présentés dans la présente description détaillée peuvent être combinés entre eux (sauf indication contraire, ou contradiction évidente).

En outre, la présente invention n'est pas limitée aux modes de réalisation précédemment décrits mais s'étend à tout mode de réalisation entrant dans la portée des revendications.

## Revendications

1. Méthode de définition et de régulation d'une dose de coagulant (COAG), et éventuellement d'au moins un second réactif, à injecter dans un moyen de traitement par coagulation d'une eau brute (EB) en une eau décantée (ED) comprenant :

   - une étape de définition d'une dose optimale de coagulant ($[COAG]_{OPT}$), ladite étape de définition comprenant :

      a) une étape de détermination pour l'eau brute d'une valeur ($P_{ORG1\_EB}$) d'un premier paramètre organique ($P_{ORG1}$) apte à renseigner sur l'aptitude d'une eau brute (EB) à coaguler, et d'une valeur ($P_{MIN\_EB}$) d'au moins un paramètre minéral ($P_{MIN}$) apte à renseigner sur la charge minérale de l'eau brute (EB) ;
      b) une étape de détermination d'une classe d'eau ($CL_{EB}$) pour l'eau brute en fonction des valeurs déterminées ($P_{ORG1\_EB}$, $P_{MIN\_EB}$) pour l'eau brute du premier paramètre organique et du paramètre minéral, une classe d'eau ($CL_{EB}$) étant **caractérisée par** une première plage de valeurs du premier paramètre organique ($P_{ORG1}$) et une seconde plage de valeurs du paramètre minéral ($PMIN\_EB$) ;
      c) une étape de détermination d'une valeur pour l'eau brute ($P_{ORG2\_EB}$) d'un deuxième paramètre organique ($P_{ORG2}$) apte à renseigner sur la quantité de matière organique dissoute dans une eau considérée ;
      d) une étape de définition d'une valeur cible ($P_{ORG2\_ED}$) pour l'eau décantée du deuxième paramètre organique ($P_{ORG2}$) ;
      e) une étape de sélection d'une fonction ($f_i$) apte à établir une relation entre le deuxième paramètre organique ($P_{ORG2}$) et une dose de coagulant ($[COAG]$) ajoutée à l'eau brute, ladite fonction ($f_i$) étant sélectionnée pour la classe d'eau ($CL_{EB}$) déterminée pour l'eau brute et pour la valeur déterminée pour l'eau brute du deuxième paramètre organique ($P_{ORG2\_EB}$) ; et
      f) une étape d'utilisation de la fonction ($f_i$) sélectionnée, de manière à déterminer une première dose de coagulant correspondant à la valeur cible définie pour l'eau décantée du second paramètre organique, la première dose de coagulant étant la dose optimale de coagulant ($[COAG]_{OPT}$) ;

   - une étape de mesure d'une valeur réelle du deuxième paramètre organique ($P_{ORG2}$) pour l'eau décantée ;
   - une étape de détermination d'un écart entre la valeur réelle et la valeur cible ($PORG2\_ED$) du deuxième paramètre organique ($P_{ORG2}$) pour l'eau décantée ; et, si l'écart est inférieur à un seuil inférieur ($S_{INF}$) ou supérieur à un seuil supérieur ($S_{SUP}$) :

      - une étape de régulation de la dose de coagulant (COAG), et éventuellement d'au moins un second réactif, à injecter dans le moyen de traitement, ladite étape de régulation partant de la dose optimale de coagulant définie ($[COAG]_{OPT}$) et comprenant :

         - une étape d'augmentation de la dose de coagulant si l'écart entre la valeur réelle et la valeur cible

($P_{ORG2\_ED}$) du deuxième paramètre organique ($P_{ORG2}$) pour l'eau décantée est supérieur au seuil supérieur ($S_{SUP}$) ; ou

- une étape de diminution de la dose de coagulant si l'écart entre la valeur réelle et la valeur cible ($P_{ORG2\_ED}$) du deuxième paramètre organique ($P_{ORG2}$) pour l'eau décantée est inférieur au seuil inférieur ($S_{INF}$).

2. Méthode selon la revendication 1, comprenant en outre une étape de détermination d'une variation ($VAR_{EB}$) dans le temps de la valeur du deuxième paramètre organique pour l'eau brute ($P_{ORG2\_EB}$), l'étape de régulation étant bloquée si ladite variation est supérieure à une limite de variation ($L_{VAR}$) définie, la dose de coagulant à injecter étant alors la dose optimale de coagulant ($[COAG]_{OPT}$).

3. Méthode selon la revendication 1 ou 2, l'étape de régulation mettant en œuvre une boucle de régulation fermée étant mise en œuvre au moyen d'un régulateur Proportionnel, Intégral, Dérivé (PID), dont les facteurs multiplicateurs sont fonction de l'efficacité du coagulant et/ou du second réactif, du volume du moyen de coagulation/décantation et/ou du débit de l'eau brute.

4. Méthode selon l'une des revendications 1 à 3, comprenant en outre une étape de mesure du pH de l'eau décantée ($pH_{ED}$), l'étape de régulation comprenant une étape de blocage de l'augmentation de la dose de coagulant si le pH de l'eau décantée est inférieur à un seuil de pH ($pH_{min}$).

5. Méthode selon l'une des revendications 1 à 4, comprenant en outre :

   - une étape de définition d'une valeur cible ($TURB_{ED}$) de la turbidité pour l'eau décantée (ED) ; et
   - une étape de détermination d'une deuxième dose de coagulant ($[COAG2]$) à ajouter à l'eau brute (EB) pour atteindre la valeur cible ($TURB_{ED}$) de la turbidité pour l'eau décantée ;

   la dose de coagulant diminuée étant supérieure ou égale à la deuxième dose de coagulant ($[COAG2]$).

6. Méthode selon l'une des revendications précédentes, dans laquelle :

   - le premier paramètre organique ($P_{ORG1}$) comprend le rapport entre l'absorbance UV à 254 nm exprimée en $m^{-1}$ et le carbone organique dissous (COD) exprimé en mg/L et optionnellement la répartition du COD par chromatographie liquide, et/ou
   - le paramètre minéral ($P_{MIN}$) comprend le titre alcalinométrique complet, la concentration en ions chlorure et/ou la concentration en ions sodium, et/ou
   - le deuxième paramètre organique ($P_{ORG2}$) est l'absorbance UV à 254 nm exprimée en $m^{-1}$.

7. Méthode selon l'une des revendications 1 à 6, l'étape de régulation comprenant en outre une étape d'ajout d'un second réactif (REAC) à injecter, par exemple un charbon actif en poudre (CAP), si l'écart entre la valeur réelle et la valeur cible ($P_{ORG2\_ED}$) du deuxième paramètre organique ($P_{ORG2}$) pour l'eau décantée est supérieur au seuil supérieur ($S_{SUP}$).

8. Méthode selon l'une des revendications précédentes, comprenant en outre une étape de définition d'une dose d'un second réactif (REAC) à injecter, par exemple un charbon actif en poudre (CAP), ladite étape de définition d'une dose d'un second réactif étant antérieure à l'étape de régulation.

9. Méthode selon l'une des revendications 7 ou 8, l'étape de régulation comprenant en outre :

   - une étape d'augmentation du second réactif (REAC) si l'écart entre la valeur réelle et la valeur cible ($P_{ORG2\_ED}$) du deuxième paramètre organique ($P_{ORG2}$) pour l'eau décantée est supérieur au seuil supérieur ($S_{SUP}$), et/ou
   - une étape de diminution du second réactif (REAC) si l'écart entre la valeur réelle et la valeur cible ($P_{ORG2\_ED}$) du deuxième paramètre organique ($P_{ORG2}$) pour l'eau décantée est inférieur au seuil inférieur ($S_{INF}$).

10. Méthode selon la revendication 9, l'étape de régulation comprenant, si l'écart entre la valeur réelle et la valeur cible ($P_{ORG2\_ED}$) du deuxième paramètre organique ($P_{ORG2}$) pour l'eau décantée est supérieur au seuil supérieur ($S_{SUP}$) :

   - une étape d'augmentation de la dose de coagulant (COAG) jusqu'à la dose maximale économiquement admissible de coagulant (DMEA) ;

puis, si la dose de coagulant atteint la DMEA, et si l'écart entre la valeur réelle et la valeur cible ($P_{ORG2\_ED}$) du deuxième paramètre organique ($P_{ORG2}$) pour l'eau décantée reste supérieur au seuil supérieur ($S_{SUP}$), l'étape de régulation comprend en outre une étape d'ajout du second réactif (REAC), par exemple du charbon actif en poudre (CAP), notamment tant que l'écart entre la valeur réelle et la valeur cible ($P_{ORG2\_ED}$) du deuxième paramètre organique ($P_{ORG2}$) pour l'eau décantée reste supérieur au seuil supérieur ($S_{SUP}$).

11. Méthode selon la revendication 9 ou 10, l'étape de régulation comprenant, si l'écart entre la valeur réelle et la valeur cible ($P_{ORG2\_ED}$) du deuxième paramètre organique ($P_{ORG2}$) pour l'eau décantée est inférieur au seuil inférieur ($S_{INF}$) :

- une étape de diminution de la dose du second réactif (REAC), par exemple du charbon actif en poudre (CAP), tant que l'écart entre la valeur réelle et la valeur cible ($P_{ORG2\_ED}$) du deuxième paramètre organique ($P_{ORG2}$) pour l'eau décantée reste inférieur au seuil inférieur ($S_{INF}$) ;

puis, lorsque la dose du second réactif (REAC) est nulle et que l'écart entre la valeur réelle et la valeur cible ($P_{ORG2\_ED}$) du deuxième paramètre organique ($P_{ORG2}$) pour l'eau décantée reste inférieur au seuil inférieur ($S_{INF}$), l'étape de régulation comprend en outre une étape de diminution de la dose de coagulant (COAG), notamment tant que l'écart entre la valeur réelle et la valeur cible ($P_{ORG2\_ED}$) du deuxième paramètre organique ($P_{ORG2}$) pour l'eau décantée reste inférieur au seuil inférieur ($S_{INF}$).

12. Méthode selon la revendication 11 combinée avec la revendication 5, la dose de coagulant (COAG) diminuée étant supérieure ou égale à la deuxième dose de coagulant ([COAG2]).

13. Système de définition et de régulation d'une dose de coagulant (COAG), et éventuellement d'au moins un second réactif, à injecter dans un moyen de traitement par coagulation d'une eau brute (EB) en une eau décantée (ED), le système comprenant des moyens d'injection du coagulant et le cas échéant de l'au moins un second réactif, le système étant configuré pour mettre en œuvre la méthode de définition et de régulation d'une dose du coagulant (COAG) à injecter selon l'une des revendications 1 à 12, le système comprenant en outre des moyens de mesure des valeurs pour l'eau brute et/ou l'eau décantée du premier et du deuxième paramètres organiques ($P_{ORG1}$, $P_{ORG2}$), des moyens de mesure des valeurs pour l'eau brute de l'au moins un paramètre minéral ($P_{MIN}$) .

14. Produit programme d'ordinateur comprenant des instructions de code de programme qui conduisent le système selon la revendication 13 à exécuter les étapes de la méthode selon l'une des revendications 1 à 12.

15. Procédé de traitement d'une eau brute comprenant au moins une étape de détermination d'une dose de coagulant (COAG) à injecter selon la méthode de définition et de régulation d'une dose de coagulant (COAG) selon l'une quelconque des revendications 1 à 12, et au moins une étape de coagulation de l'eau brute comprenant l'injection de la dose de coagulant ainsi déterminée.

**Patentansprüche**

1. Verfahren zur Definition und Regulierung einer Koagulansdosis (COAG) und optional mindestens eines zweiten Reagens, die in eine Behandlungseinrichtung durch Koagulation eines Rohwassers (EB) zu einem abgesetzten Wasser (ED) eingespritzt werden sollen, umfassend:

- einen Definitionsschritt einer optimalen Koagulansdosis ([COAG]$_{OPT}$), der Definitionsschritt umfassend:

a) einen Bestimmungsschritt eines Werts für das Rohwasser ($P_{ORG1\_EB}$) eines ersten organischen Parameters ($P_{ORG1}$), der geeignet ist, um über die Eignung eines Rohwassers (EB) zur Koagulation Auskunft zu geben, und eines Werts ($P_{MIN\_EB}$) von mindestens einem mineralischen Parameter ($P_{MIN}$), der geeignet ist, um über den Mineralgehalt des Rohwassers (EB) Auskunft zu geben;
b) einen Bestimmungsschritt einer Wasserklasse ($CL_{EB}$) für das Rohwasser basierend auf den bestimmten Werten ($P_{ORGI\_EB}$, $P_{MIN\_EB}$) für das Rohwasser des ersten organischen Parameters und des Mineralparameters, wobei eine Wasserklasse ($CL_{EB}$) **gekennzeichnet ist durch** einen ersten Wertebereich des ersten organischen Parameters ($P_{ORG1}$) und einen zweiten Wertebereich des Mineralparameters ($P_{MIN\_EB}$);
c) einen Bestimmungsschritt eines Werts für das Rohwasser ($P_{ORG2\_EB}$) eines zweiten organischen Parameters ($P_{ORG2}$), der über die Menge der in einem bestimmten Wasser gelösten organischen Stoffe Auskunft geben kann;

d) einen Definitionsschritt eines Sollwerts ($P_{ORG2\_ED}$) für das abgesetzte Wasser des zweiten organischen Parameters ($P_{ORG2}$);

e) einen Auswahlschritt einer Funktion (fi), die geeignet ist, um eine Beziehung zwischen dem zweiten organischen Parameter ($P_{ORG2}$) und einer Koagulansdosis ([COAG]), die dem Rohwasser hinzugefügt wird, herzustellen, wobei die Funktion ($f_i$) für die Wasserklasse ($CL_{EB}$), die für das Rohwasser bestimmt wird, und für den Wert des zweiten organischen Parameters ($P_{ORC2\_EB}$), der für das Rohwasser bestimmt wird, ausgewählt ist; und

f) einen Verwendungsschritt der ausgewählten Funktion ($f_l$), um eine erste Koagulansdosis zu bestimmen, die dem für das abgesetzte Wasser definierten Sollwert des zweiten organischen Parameters entspricht, wobei die erste Koagulansdosis die optimale Koagulansdosis ([COAG]$_{OPT}$) ist;

- einen Messschritt eines tatsächlichen Werts des zweiten organischen Parameters ($P_{ORG2}$) für das abgesetzte Wasser;

- einen Bestimmungsschritt einer Abweichung zwischen dem tatsächlichen Wert und dem Sollwert ($P_{ORG2\_ED}$) des zweiten organischen Parameters ($P_{ORG2}$) für das abgesetzte Wasser; und, wenn die Abweichung kleiner ist als ein unterer Schwellenwert ($S_{INF}$) oder über einem oberen Schwellenwert ($S_{SUP}$):

- einen Regulierungsschritt der Koagulansdosis (COAG) und optional mindestens eines zweiten Reagens, die in die Behandlungseinrichtung eingespritzt werden soll, wobei der Regulierungsschritt von der definierten optimalen Koagulansdosis ([COAG]$_{OPT}$) ausgeht und Folgendes umfasst:

- einen Erhöhungsschritt der Koagulansdosis, wenn die Abweichung zwischen dem Istwert und dem Sollwert ($P_{ORG2\_ED}$) des zweiten organischen Parameters ($P_{ORG2}$) für das abgesetzte Wasser höher ist als der obere Schwellenwert ($S_{SUP}$); oder

- einen Verringerungsschritt der Koagulansdosis, wenn die Abweichung zwischen dem Istwert und dem Sollwert ($P_{ORG2\_ED}$) des zweiten organischen Parameters ($P_{ORG2}$) für das abgesetzte Wasser kleiner ist als der untere Schwellenwert ($S_{INF}$).

2. Verfahren nach Anspruch 1, ferner umfassend einen Bestimmungsschritt einer Variation ($VAR_{EB}$) über die Zeit des Werts des zweiten organischen Parameters für das Rohwasser ($P_{ORG2\_EB}$), wobei der Regulierungsschritt blockiert wird, wenn diese Änderung größer ist als eine definierte Änderungsgrenze ($L_{VAR}$), wobei die einzuspritzende Koagulansdosis dann die optimale Koagulansdosis ([COAG]$_{OPT}$) ist.

3. Verfahren nach Anspruch 1 oder 2, wobei der Regulierungsschritt, der einen geschlossenen Regulierungskreis implementiert, mittels eines Proportional-, Integral-, abgeleiteten Reglers (PID) umgesetzt wird, dessen Multiplikationsfaktoren von der Wirksamkeit des Koagulans und/oder des zweiten Reagenz, dem Volumen der Koagulations-/Absetzeinrichtung und/oder dem Durchfluss des Rohwassers abhängig sind.

4. Verfahren nach einem der Ansprüche 1 bis 3, ferner umfassend einen Messschritt des pHs des abgesetzten Wassers ($pH_{ED}$), der Regulierungsschritt umfassend einen Blockierschritt einer Erhöhung der Koagulansdosis, wenn der pH des abgesetzten Wassers unter einem pH-Schwellenwert ($pH_{min}$) ist.

5. Verfahren nach einem der Ansprüche 1 bis 4, ferner umfassend:

- einen Definitionsschritt eines Sollwerts ($TURB_{\_ED}$) der Trübung für das abgesetzte Wasser (ED); und
- einen Bestimmungsschritt einer zweiten Koagulansdosis ([COAG2]), die zu dem Rohwasser (EB) hinzugefügt werden muss, um den Sollwert ($TURB_{\_ED}$) der Trübung für das abgesetzte Wasser zu erreichen;

wobei die verringerte Koagulansdosis größer als oder gleich wie die zweite Koagulansdosis ([COAG2]) ist.

6. Verfahren nach einem der vorherigen Ansprüche, wobei:

- der erste organische Parameter ($P_{ORG1}$) das Verhältnis zwischen der UV-Absorbanz bei 254 nm, ausgedrückt in $m^{-1}$ und dem gelösten organischen Kohlenstoff (DOC), ausgedrückt in mg/l, und optional die DOC-Verteilung durch Flüssigchromatographie umfasst, und/oder
- der Mineralparameter ($P_{MIN}$) den vollen alkalometrischen Titer, die Chloridionenkonzentration und/oder die Natriumionenkonzentration umfasst, und/oder

- der zweite organische Parameter ($P_{ORG2}$) die UV-Absorbanz bei 254 nm, ausgedrückt in $m^{-1}$ ist.

7. Verfahren nach einem der Ansprüche 1 bis 6, wobei der Regulierungsschritt zusätzlich einen Hinzufügeschritt eines zweiten einzuspritzenden Reagenz (REAC), z. B. einer pulverförmigen Aktivkohle (CAP), umfasst, wenn die Abweichung zwischen dem Istwert und dem Sollwert ($P_{ORG2\_ED}$) des zweiten organischen Parameters ($P_{ORG2}$) für das abgesetzte Wasser über dem oberen Schwellenwert ($S_{SUP}$ ist).

8. Verfahren nach einem der vorherigen Ansprüche, ferner umfassend einen Definitionsschritt einer Dosis eines zweiten Reagenz (REAC), das eingespritzt werden soll, z. B. pulverförmige Aktivkohle (CAP), wobei der Definitionsschritt einer Dosis eines zweiten Reagenz vor dem Regulierungsschritt ist.

9. Verfahren nach einem der Ansprüche 7 oder 8, der Regulierungsschritt ferner umfassend:

- einen Erhöhungsschritt des zweiten Reagenz (REAC), wenn die Abweichung zwischen dem Istwert und dem Sollwert ($P_{ORG2\_ED}$) des zweiten organischen Parameters ($P_{ORG2}$) für das abgesetzte Wasser höher ist als der obere Schwellenwert ($S_{SUP}$), und/oder
- einen Verringerungsschritt des zweiten Reagenz (REAC), wenn die Abweichung zwischen dem Istwert und dem Sollwert ($P_{ORG2\_ED}$) des zweiten organischen Parameters ($P_{ORG2}$) für das abgesetzte Wasser kleiner ist als der untere Schwellenwert ($S_{INF}$).

10. Verfahren nach Anspruch 9, der Regulierungsschritt umfassend, dass, wenn die Abweichung zwischen dem Istwert und dem Sollwert ($P_{ORG2\_ED}$) des zweiten organischen Parameters ($P_{ORG2}$) für das abgesetzte Wasser größer ist als der obere Schwellenwert ($S_{SUP}$):

- einen Erhöhungsschritt der Koagulansdosis (COAG) bis zu der wirtschaftlich zulässigen maximalen Koagulansdosis (DMEA);

dann, wenn die Koagulansdosis den DMEA erreicht, und wenn die Abweichung zwischen dem Istwert und dem Sollwert ($P_{ORG2\_ED}$) des zweiten organischen Parameters ($P_{ORG2}$) für das abgesetzte Wasser über dem oberen Schwellenwert ($S_{SUP}$) bleibt, der Regulierungsschritt ferner einen Schritt eines Hinzufügens des zweiten Reagenz (REAC), z. B. Pulveraktivkohle (CAP) umfasst, insbesondere solange die Abweichung zwischen dem Istwert und dem Sollwert ($P_{ORG2\_ED}$) des zweiten organischen Parameters ($P_{ORG2}$) für das abgesetzte Wasser über dem oberen Schwellenwert ($S_{SUP}$) bleibt.

11. Verfahren nach Anspruch 9 oder 10, der Regulierungsschritt umfassend, dass, wenn die Abweichung zwischen dem Istwert und dem Sollwert ($P_{ORG2\_ED}$) des zweiten organischen Parameters ($P_{ORG2}$) für das abgesetzte Wasser kleiner ist als der untere Schwellenwert ($S_{INF}$):

- einen Verringerungsschritt der Dosis des zweiten Reagens (REAC), z. B. Pulveraktivkohle (CAP), solange die Abweichung zwischen dem Istwert und dem Sollwert ($P_{ORG2\_ED}$) des zweiten organischen Parameters ($P_{ORG2}$) für das abgesetzte Wasser unterhalb des unteren Schwellenwerts ($S_{INF}$) bleibt;

dann, wenn die Dosis des zweiten Reagenz (REAC) Null ist und die Abweichung zwischen dem Istwert und dem Sollwert ($P_{ORG2\_ED}$) des zweiten organischen Parameters ($P_{org2}$) für das abgesetzte Wasser unterhalb des unteren Schwellenwerts ($S_{INF}$) bleibt, der Regulierungsschritt ferner einen Verringerungsschritt der Koagulansdosis (COAG) umfasst, insbesondere solange die Abweichung zwischen dem Istwert und dem Sollwert ($P_{ORG2\_ED}$) des zweiten organischen Parameters ($P_{ORG2}$) für das abgesetzte Wasser unterhalb des unteren Schwellenwerts ($S_{INF}$) bleibt.

12. Verfahren nach Anspruch 11 in Kombination mit Anspruch 5, wobei die verringerte Koagulansdosis (COAG) größer als oder gleich wie die zweite Koagulansdosis ([COAG2]) ist.

13. System zur Definition und Regulierung einer Koagulansdosis (COAG) und optional mindestens eines zweiten Reagens, die in eine Behandlungseinrichtung durch Koagulation eines Rohwassers (EB) zu einem abgesetzten Wasser (ED) eingespritzt werden soll, das System umfassend Einspritzeinrichtungen des Koagulans und optional des mindestens einen zweiten Reagens, wobei das System konfiguriert ist, um das Verfahren zur Definition und Regulierung einer Koagulansdosis (COAG) nach einem der Ansprüche 1 bis 12 umzusetzen, das System ferner umfassend Messeinrichtungen der Werte für das Rohwasser und/oder das abgesetzte Wasser des ersten und des zweiten organischen Parameters ($P_{ORG1}$, $P_{ORG2}$), Messeinrichtungen der Werte für das Rohwasser des mindestens einen mineralischen Parameters ($P_{MIN}$).

14. Computerprogrammprodukt, umfassend Programmcodeanweisungen, die das System nach Anspruch 13 dazu veranlassen, die Schritte des Verfahrens nach einem der Ansprüche 1 bis 12 auszuführen.

15. Behandlungsverfahren eines Rohwassers, umfassend mindestens einen Bestimmungsschritt einer einer einzuspritzenden Koagulansdosis (COAG) gemäß dem Verfahren zur Definition und Regulierung einer Koagulansdosis (COAG) nach einem der Ansprüche 1 bis 12 und mindestens einen Koagulationsschritt des Rohwassers, umfassend ein Einspritzen der somit bestimmten Koagulansdosis.

**Claims**

1. A method of defining and regulating a dose of coagulant (COAG), and optionally at least one second reagent, to be injected into a means of treatment by coagulation of a raw water (EB) into a settled water (ED) comprising:

   - a step of defining an optimal coagulant dose ($[COAG]_{OPT}$), said step of defining comprising:

      a) a step of determining a value ($P_{ORG1\_EB}$) of a first organic parameter ($P_{ORG1}$) capable of providing information about the ability of raw water (EB) to coagulate, and a value ($P_{MIN\_EB}$) of at least one mineral parameter ($P_{MIN}$) able to provide information on the mineral load of the raw water (EB);
      b) a step to determine a water class ($CL_{EB}$) for the raw water based on the values determined ($P_{ORGI\_EB}$, $P_{MIN\_EB}$) for raw water for the first organic parameter and the mineral parameter, a water class ($CL_{EB}$) being **characterised by** a first range of values for the first organic parameter ($P_{ORG1}$) and a second range of values for the mineral parameter ($P_{MIN\_EB}$) ;
      c) a step of determining a value for the raw water ($P_{ORG2\_EB}$) of a second organic parameter ($P_{ORG2}$) capable of providing information about the quantity of organic matter dissolved in the water in question;
      d) a step of defining a target value ($P_{ORG2\_ED}$) for settled water for the second organic parameter ($P_{ORG2}$);
      e) a step of selecting a function (fi) able to establish a relationship between the second organic parameter ($P_{ORG2}$) and a dose of coagulant ([COAG]) added to the raw water, said function ($f_i$) being selected for the water class ($CL_{EB}$) determined for the raw water and for the value determined for the raw water of the second organic parameter ($P_{ORG2\_EB}$); and
      f) a step of using the selected function ($f_I$), so as to determine a first dose of coagulant corresponding to the target value defined for the settled water for the second organic parameter, the first dose of coagulant being the optimum dose of coagulant ($[COAG]_{OPT}$);

   - a step of measuring an actual value of the second organic parameter ($P_{ORG2}$) for the settled water;
   - a step of determining a difference between the actual value and the target value ($P_{ORG2\_ED}$) of the second organic parameter ($P_{ORG2}$) for the settled water; and, if the difference is less than a lower threshold ($S_{INF}$) or greater than an upper threshold ($S_{SUP}$):

      - a step of regulating the dose of coagulant (COAG), and optionally of at least one second reagent, to be injected into the treatment means, said step of regulating starting from the defined optimum dose of coagulant ($[COAG]_{OPT}$) and comprising:

         - a step of increasing the coagulant dose if the difference between the actual value and the target value ($P_{ORG2\_ED}$) of the second organic parameter ($P_{ORG2}$) for the settled water is greater than the upper threshold ($S_{SUP}$); or
         - a step of decreasing the coagulant dose if the difference between the actual value and the target value ($P_{ORG2\_ED}$) of the second organic parameter ($P_{ORG2}$) for the settled water is less than the lower threshold ($S_{INF}$).

2. The method according to claim 1, further comprising a step of determining a variation ($VAR_{EB}$) over time of the value of the second organic parameter for the raw water ($P_{ORG2\_EB}$), the step of regulating being blocked if said variation is greater than a defined variation limit ($L_{VAR)}$, the dose of coagulant to be injected then being the optimum dose of coagulant ($[COAG]_{OPT}$).

3. The method according to claim 1 or 2, the step of regulating implementing a closed control loop being implemented by means of a Proportional, Integral, Derivative (PID) controller, the multiplying factors of which are a function of the efficiency of the coagulant and/or of the second reagent, of the volume of the coagulation/settling means and/or of the flow rate of the raw water.

4. The method according to one of claims 1 to 3, further comprising a step of measuring the pH of the settled water ($pH_{ED}$), the step of regulating comprising a step of blocking the increase in the coagulant dose if the pH of the settled water is below a pH threshold ($pH_{min}$).

5. The method according to any one of claims 1 to 4, further comprising:

- a step of defining a target value ($TURB_{\_ED}$) for the turbidity of the settled water (ED); and
- a step of determining a second dose of coagulant ([COAG2]) to be added to the raw water (EB) to reach the target value ($TURB_{\_ED}$) for the settled water;

the reduced dose of coagulant being greater than or equal to the second dose of coagulant ([COAG2]).

6. The method according to one of the preceding claims, in which:

- the first organic parameter ($P_{ORG1}$) comprises the ratio between the UV absorbance at 254 nm expressed in $m^{-1}$ and dissolved organic carbon (DOC) expressed in mg/L and optionally the DOC distribution by liquid chromatography, and/or
- the mineral parameter ($P_{MIN}$) comprises the full alkalinity titre, the chloride ion concentration and/or the sodium ion concentration, and/or
- the second organic parameter ($P_{ORG2}$) is the UV absorbance at 254 nm expressed in $m^{-1}$.

7. The method according to one of claims 1 to 6, the step of regulating further comprising a step of adding a second reagent (REAC) to be injected, for example a powdered activated carbon (PAC), if the difference between the actual value and the target value ($P_{ORG2\_ED}$) of the second organic parameter ($P_{ORG2}$) for the settled water is greater than the upper threshold ($S_{SUP}$).

8. The method according to one of the preceding claims, further comprising a step of defining a dose of a second reagent (REAC) to be injected, for example a powdered activated carbon (PAC), said step of defining a dose of a second reagent being prior to the step of regulating.

9. The method according to one of claims 7 or 8, the step of regulating further comprising:

- a step of increasing the second reagent (REAC) if the difference between the actual value and the target value ($P_{ORG2\_ED}$) of the second organic parameter ($P_{ORG2}$) for the settled water is greater than the upper threshold ($S_{SUP}$), and/or
- a step of reducing the second reagent (REAC) if the difference between the actual value and the target value ($P_{ORG2\_ED}$) of the second organic parameter ($P_{ORG2}$) for the settled water is less than the lower threshold ($S_{INF}$).

10. The method according to claim 9, the step of regulating comprising, if the difference between the actual value and the target value ($P_{ORG2\_ED}$) of the second organic parameter ($P_{ORG2}$) for the settled water is greater than the upper threshold ($S_{SUP}$):

- a step of increasing the dose of coagulant (COAG) up to the maximum economically acceptable dose of coagulant (MEAD);

then, if the dose of coagulant reaches the MEAD, and if the difference between the actual value and the target value ($P_{ORG2\_ED}$) of the second organic parameter ($P_{ORG2}$) for the settled water remains greater than the upper threshold ($S_{SUP}$), the step of regulating further comprises a step of adding the second reagent (REAC), for example powdered activated carbon (PAC), in particular for as long as the difference between the actual value and the target value ($P_{ORG2\_ED}$) of the second organic parameter ($P_{ORG2}$) for the settled water remains greater than the upper threshold ($S_{SUP}$).

11. The method according to claim 9 or 10, the step of regulating comprising, if the difference between the actual value and the target value ($P_{ORG2\_ED}$) of the second organic parameter ($P_{ORG2}$) for the settled water is less than the lower threshold ($S_{INF}$):

- a step of reducing the dose of the second reagent (REAC), for example powdered activated carbon (PAC), as long as the difference between the actual value and the target value ($P_{ORG2\_ED}$) of the second organic parameter ($P_{ORG2}$) for the settled water remains below the lower threshold ($S_{INF}$);

then, when the dose of the second reagent (REAC) is zero and the difference between the actual value and the target value ($P_{ORG2\_ED}$) of the second organic parameter (Porg2) for the settled water remains below the lower threshold ($S_{INF}$), the step of regulating further comprises a step of reducing the coagulant dose (COAG), in particular as long as the difference between the actual value and the target value ($P_{ORG2\_ED}$) of the second organic parameter ($P_{ORG2}$) for the settled water remains below the lower threshold ($S_{INF}$).

12. The method according to claim 11 in combination with claim 5, wherein the reduced coagulant dose (COAG) is greater than or equal to the second coagulant dose ([COAG2]).

13. A system for defining and regulating a dose of coagulant (COAG), and optionally of at least one second reagent, to be injected into a means of treatment by coagulation of a raw water (EB) into a settled water (ED), the system comprising means for injecting the coagulant and optionally the at least one second reagent, the system being configured to implement the method for defining and regulating a dose of coagulant (COAG) to be injected according to one of claims 1 to 12, the system further comprising means for measuring the values for the raw water and/or the settled water of the first and second organic parameters ($P_{ORG1}$, $P_{ORG2}$), means for measuring the values for the raw water of at least one mineral parameter ($P_{MIN}$) .

14. A computer program product comprising program code instructions that cause the system of claim 13 to perform the steps of the method according to any one of claims 1 to 12.

15. The method of treating raw water comprising at least one step of determining a dose of coagulant (COAG) to be injected according to the method of defining and regulating a dose of coagulant (COAG) according to any one of claims 1 to 12, and at least one step of coagulating the raw water comprising the injection of the dose of coagulant thus determined.

100

Figure 1

Figure 2

Cl < 60 mg/l
Et/ou Na⁺ < 30 mg/l

Cl ≥ 60 mg/l
Et/ou Na⁺ ≥ 30 mg/l

TAC < 6 °f
6 ≤ TAC < 12 °f
TAC ≥ 12 °f

TAC < 6 °f
6 ≤ TAC < 12 °f
TAC ≥ 12 °f

SUVA < 2
2 ≤ SUVA < 4
SUVA ≥ 4

SUVA < 2
2 ≤ SUVA < 4
SUVA ≥ 4

SUVA < 2
2 ≤ SUVA < 4
SUVA ≥ 4

SLVA < 2
2 ≤ SUVA < 4
SLVA ≥ 4

SUVA < 2
2 ≤ SUVA < 4
SUVA ≥ 4

SUVA < 2
2 ≤ SUVA < 4
SUVA ≥ 4

Figure 3

$R_{EB1}$

$c_i$ (m$^{-1}$)

$y = a_6 x + b_6$

$y = a_5 x + b_5$

$y = a_4 x + b_4$

S4    S5

$UV_{EB}$ (m$^{-1}$)

Figure 4A

$R_{EB2}$

Figure 4B

**DMEA**

Figure 5

$R_{EB3}$

Figure 6

Figure 7

Figure 8A

Figure 8B

Figure 9

$$y=a_8x^4+b_8x^3+c_8x^2+d_8x+e_8$$
$$y=a_9x^4+b_9x^3+c_9x^2+d_9x+e_9$$

Figure 10

Figure 11

Figure 12A

Figure 12B

Figure 13

Figure 14

EP 4 087 824 B1

Figure 15

Figure 16

39

Figure 17

Figure 18

Figure 19

Figure 20

Figure 21

Figure 22

Figure 23

Figure 24

Figure 25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009002192 A
- JP 2014065030 A
- JP 2005125207 A
- JP 2012196628 A
- US 2013037463 A

**Littérature non-brevet citée dans la description**

- **CRITCHLEY et al.** *Automatic coagulation control at water-treatment plants in the north-west region of England*, 1990
- **CHAN MOON KIM** ; **MANUKID PARNICHKUN**. MLP, ANFIS, and GRNN based real-time coagulant dosage determination and accuracy comparison using full-scale data of a water treatment plant. *Journal of Water Supply, Research and Technology - AQUA*, 2017, vol. 66 (1)
- **EDWARDS**. Predicting DOC removal during enhanced coagulation. *Journal - American Water Works Association*, 1997, vol. 89 (5), 78-89